# EUROPEAN PATENT APPLICATION

(11) **EP 4 848 832 A1**
(43) Date of publication of application: **02.12.2026**
(21) Application number: 25744507.2
(22) Date of filing: 16.01.2025
(51) Int. Cl.: H04W 52/02

(54) **INFORMATION TRANSMISSION METHOD, APPARATUS, DEVICE, AND STORAGE MEDIUM**

(30) Priority: 22.01.2024 CN 202410093628
(71) Applicant: Vivo Mobile Communication Co., Ltd., Dongguan, Guangdong 523863 (CN)
(72) Inventor: YANG, Yuming, Dongguan, Guangdong 523863 (CN); LI, Gen, Dongguan, Guangdong 523863 (CN); CHEN, Xiaohang, Dongguan, Guangdong 523863 (CN)
(74) Representative: Studio Torta S.p.A.
(86) International application number: PCT/CN2025/072774
(87) International publication number: WO 2025/157065

(57) **Abstract**

This application discloses an information transmission method and apparatus, a device, and a storage medium, and belongs to the field of communications technologies. An information transmission method in an embodiment of this application includes: performing, by a network side device, at least one of the following: sending a first reference signal in a first sending mode; sending the first reference signal according to assistance information reported by user equipment UE; and sending first indication information related to the first reference signal. The first indication information includes at least one of the following: a sending indication of the first reference signal; a sending pause indication of the first reference signal; and the first sending mode.

## Description

### CROSS-REFERENCE TO RELATED APPLICATIONS

This application claims priority to Chinese Patent Application No. 202410093628.4, entitled "INFORMATION TRANSMISSION METHOD AND APPARATUS, DEVICE, AND STORAGE MEDIUM" filed with the China National Intellectual Property Administration on January 22, 2024, which is incorporated herein by reference in its entirety.

### TECHNICAL FIELD

This application relates to the field of communication technologies, and specifically, to an information transmission method and apparatus, a device, and a storage medium.

### BACKGROUND

A network side device (for example, a base station) periodically and continuously sends a reference signal such as a synchronization signal block (Synchronization Signal Block, SSB), to satisfy requirements such as synchronization and measurement of user equipment (User Equipment, UE).

However, continuously sending a reference signal according to a fixed sending period is not beneficial to energy saving of the network side device. Therefore, a reference signal sending method needs to be provided, to save energy of a network side device.

### SUMMARY

Embodiments of this application provide an information transmission method and apparatus, a device, and a storage medium, to save energy of a network side device.

According to a first aspect, an information transmission method is provided, including:
performing, by a network side device, at least one of the following:
sending a first reference signal in a first sending mode;
sending the first reference signal according to assistance information reported by user equipment UE; and
sending first indication information related to the first reference signal, where the first indication information includes at least one of the following:
   a sending indication of the first reference signal;
   a sending pause indication of the first reference signal; and
   the first sending mode.

According to a second aspect, an information transmission method is provided, including:
performing, by user equipment UE, at least one of the following:
reporting assistance information to a network side device, where the assistance information is used to trigger the network side device to send a first reference signal;
determining, according to first information, whether to receive the first reference signal sent by the network side device; and
after receiving first indication information that is related to the first reference signal and that is sent by the network side device, receiving the first reference signal sent by the network side device, where the first indication information includes at least one of the following:
   a sending indication of the first reference signal;
   a sending pause indication of the first reference signal; and
   a sending mode of the first reference signal.

According to a third aspect, an information transmission apparatus is provided, applied to a network side device and including:
a first sending module, configured to send a first reference signal in a first sending mode;
a second sending module, configured to send the first reference signal according to assistance information reported by user equipment UE; and
a third sending module, configured to send first indication information related to the first reference signal, where the first indication information includes at least one of the following:
   a sending indication of the first reference signal;
   a sending pause indication of the first reference signal; and
   the first sending mode.

According to a fourth aspect, an information transmission apparatus is provided, applied to user equipment UE and including:
a first reporting module, configured to report assistance information to a network side device, where the assistance information is used to trigger the network side device to send a first reference signal;
a determining module, configured to determine, according to first information, whether to receive the first reference signal sent by the network side device; and
a first receiving module, configured to: after receiving first indication information that is related to the first reference signal and that is sent by the network side device, receive the first reference signal sent by the network side device, where the first indication information includes at least one of the following:
   a sending indication of the first reference signal;
   a sending pause indication of the first reference signal; and
   a sending mode of the first reference signal.

According to a fifth aspect, user equipment is provided. The user equipment includes a processor and a memory, where the memory stores a program or an instruction runnable on the processor, and when executed by the processor, the program or the instruction implements steps of the information transmission method according to the second aspect.

According to a sixth aspect, user equipment is provided, including a processor and a communications interface. The processor is configured to run a program or an instruction, so that the program or the instruction, when executed by the processor, implements steps of the information transmission method according to the second aspect, and the communications interface is configured to be coupled to the processor.

According to a seventh aspect, a network side device is provided. The network side device includes a processor and a memory. The memory stores a program or an instruction executable on the processor. When executed by the processor, the program or the instruction implements the steps of the information transmission method according to the first aspect.

According to an eighth aspect, a network side device is provided, including a processor and a communications interface. The processor is configured to run a program or an instruction, so that when executed by the processor, the program or the instruction implements the steps of the information transmission method according to the first aspect, and the communications interface is configured to be coupled to the processor.

According to a ninth aspect, a readable storage medium is provided. The readable storage medium stores a program or an instruction, where when executed by a processor, the program or the instruction implements steps of the information transmission method according to the first aspect, or steps of the information transmission method according to the second aspect.

According to a tenth aspect, an information transmission system is provided, including user equipment and a network side device. The user equipment may be configured to perform the steps of the information transmission method according to the second aspect. The network side device may be configured to perform the steps of the information transmission method according to the first aspect.

According to an eleventh aspect, a chip is provided. The chip includes a processor and a communications interface, the communications interface is coupled to the processor, and the processor is configured to run a program or an instruction, to implement steps of the information transmission method according to the first aspect or steps of the information transmission method according to the second aspect.

According to a twelfth aspect, a computer program/program product is provided. The computer program/program product is stored in a storage medium, and the program/program product is executed by at least one processor to implement steps of the information transmission method according to the first aspect or steps of the information transmission method according to the second aspect.

In the embodiments of this application, the network side device may send the first reference signal in the first sending mode at its discretion, to avoid continuously sending the first reference signal in a fixed sending period, thereby saving energy of the network side device. In addition, when the UE has an actual requirement, the UE may report the assistance information to the network side device, so that after receiving the assistance information, the network side device sends the first reference signal, to satisfy requirements of the UE such as synchronization and measurement, thereby saving energy of the network side device.

In addition, the network side device may further send the first indication information related to the first reference signal. The first indication information includes at least one of the following: a sending indication of the first reference signal; a sending pause indication of the first reference signal; and a sending mode of the first reference signal. Therefore, the network side device may send the first reference signal, pause sending, and update a sending mode according to control by the first indication information, to flexibly send the first reference signal.

### BRIEF DESCRIPTION OF THE DRAWINGS

FIG. 1 is a block diagram of a wireless communication system according to an embodiment of this application;
FIG. 2 is a diagram of a gNB system architecture according to an embodiment of this application;
FIG. 3 is a flowchart of steps of an information transmission method according to an embodiment of this application;
FIG. 4 is a flowchart of steps of another information transmission method according to an embodiment of this application;
FIG. 5 is a schematic structural diagram of an information transmission apparatus according to an embodiment of this application;
FIG. 6 is a schematic structural diagram of another information transmission apparatus according to an embodiment of this application;
FIG. 7 is a schematic structural diagram of a communication device according to an embodiment of this application;
FIG. 8 is a schematic diagram of a hardware structure of user equipment according to an embodiment of this application;
FIG. 9 is a schematic structural diagram of a network side device according to an embodiment of this application; and
FIG. 10 is a schematic structural diagram of another network side device according to an embodiment of this application.

### DETAILED DESCRIPTION

The following clearly describes the technical solutions in the embodiments of this application with reference to the accompanying drawings in the embodiments of this application. Obviously, the described embodiments are some but not all of the embodiments of this application. All other embodiments obtained by persons of ordinary skill in the art based on the embodiments of this application shall fall within the scope of protection of this application.

Terms "first" and "second" in this application are used to distinguish similar objects, and are not used to describe a specific order or sequence. It is to be understood that the terms so used are interchangeable under appropriate circumstances such that the embodiments of this application can be implemented in sequences other than those illustrated or described herein, and "first" and "second" generally distinguish objects of a same type, and the quantity of objects is not limited. For example, there may be one or more first objects. In addition, "or" in this application indicates at least one of connected objects. For example, "A or B" covers three solutions, that is, solution 1: including A and excluding B; solution 2: B is included and A is not included; and solution 3: both A and B are included. In addition, the terms "A and/or B", "at least one of A and B", and "at least one of A or B" also separately cover at least the foregoing three solutions. The character "/" generally indicates an "or" relationship between the associated objects.

The term "indication" in the specification may be a direct indication (or an explicit indication), or may be an indirect indication (or an implicit indication). The direct indication may be understood as that a sending party explicitly notifies a receiving party of content such as specific information, an operation that needs to be performed, or a request result by using the sent indication. The indirect indication may be understood as that a receiving party determines corresponding information based on an indication sent by a sending party, or performs determining and determines an operation that needs to be performed or a request result based on a determining result.

It should be noted that, the technology described in embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in the embodiments of this application are often used interchangeably, and the described technology can be used not only for the systems and radio technologies mentioned above, but also for other systems and radio technologies. A new radio (New Radio, NR) system is described in the following description for illustrative purposes, and the NR terminology is used in most of the following description, although these technologies can also be applied to applications other than the NR system, such as the 6^{th} generation (6^{th} Generation, 6G) communication system.

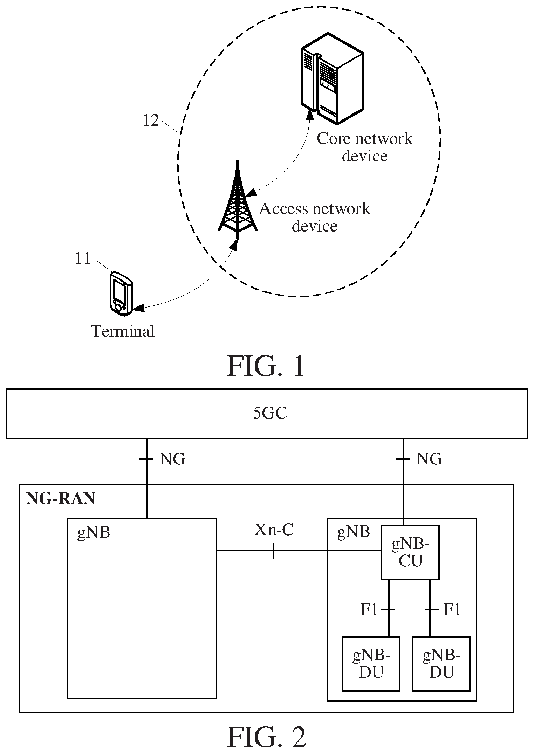

FIG. 1 is a block diagram of a wireless communications system to which an embodiment of the present application is applicable. The wireless communications system includes a terminal 11 and a network side device 12. The terminal 11 may also be referred to as user equipment (User Equipment, UE), and the terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a ship-mounted device, pedestrian user equipment (Pedestrian User Equipment, PUE), a smart household (a household device having a wireless communication function, such as a refrigerator, a television, a washing machine, or furniture), a game console, a personal computer (Personal Computer, PC), a teller machine, or a self-service machine. The wearable device includes: a smart watch, a smart bracelet, a smart headset, smart glasses, smart jewelry (a smart bracelet, a smart bracelet, a smart ring, a smart necklace, a smart ankle bangle, a smart ankle chain, and the like), a smart wristband, smart clothing, and the like. The vehicle equipment may also be referred to as an in-vehicle terminal, an in-vehicle controller, an in-vehicle module, an in-vehicle component, an in-vehicle chip, an in-vehicle unit, or the like. It should be noted that, the specific type of the terminal 11 is not limited in the embodiments of the present application. The network side device 12 may include an access network device or a core network device. The access network device may also be referred to as a radio access network (Radio Access Network, RAN) device, a wireless access network function, or a wireless access network unit. The access network device may include a base station, an access point (Access Point, AP) of a wireless local area network (Wireless Local Area Network, WLAN), a wireless fidelity (Wireless Fidelity, WiFi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission/reception point (Transmit/Receive Point, TRP), or another appropriate term in the field such as a non-terrestrial network (Non-Terrestrial Network, NTN) device (such as a satellite ( satellite) or a high altitude platform station (high altitude platform station)). Provided that a same technical effect is achieved, the base station is not limited to specific technical terms. It should be noted that, in embodiments of the present application, only a base station in the NR system is used as an example, but a specific type of the base station is not limited.

The core network device may also be referred to as a core network node, a core network function, a core network element, or the like, and includes but is not limited to at least one of the following: a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a location management function (Location Management Function, LMF), a gateway mobile location centre (Gateway Mobile Location Centre, GMLC), a network data analytics function (Network Data Analytics Function, NWDAF), a non-terrestrial network (Non-Terrestrial Network, NTN) device (such as a satellite ( satellite) or a high altitude platform station (high altitude platform station)), and the like. It should be noted that, in the embodiments of this application, a core network function in the NR system is merely used as an example for description, and a specific type of the core network device is not limited. If a name of the core network device mentioned in the embodiments of this application in a subsequent protocol version (for example, 6G) changes, the core network device also falls within the protection scope of this application.

Optionally, the core network device may be implemented by one or more functional modules in one device, or may be jointly implemented by a plurality of devices. This is not specifically limited in this embodiment of this application. It may be understood that the foregoing functional module may be a network element in a hardware device, a software functional module running on dedicated hardware, a virtualized functional module instantiated on a platform (for example, a cloud platform), or the like.

FIG. 2 is an architectural diagram of a gNB system applicable to this embodiment. As shown in FIG. 2, in an NR access network, a gNB is divided into a centralized unit gNB-CU and a distributed unit gNB-DU, so that the centralized unit and the distributed unit are connected through an F1 interface. Each gNB includes only one centralized unit CU, includes one or more distributed units DU, and one distributed unit DU includes one or more cells (cell). The CU includes a packet data convergence protocol (Packet Data Convergence Protocol, PDCP) stack and a protocol stack above, and the DU includes a protocol stack below a packet data convergence protocol (Packet Data Convergence Protocol) layer: radio link control (Radio Link Control, RLC), medium access control (Medium Access Control, MAC), and a physical (Physical, PHY) layer. On a control plane, the centralized unit CU includes radio resource control (Radio Resource Control, RRC) and PDCP (PDCP-C) of the control plane. On a user plane, the centralized unit CU includes service data adaptation protocol (Service Data Adaptation Protocol, SDAP) and PDCP (PDCP-U) of the user plane.

In a related technology, user equipment UE first detects a primary synchronization signal (Primary Synchronization Signal, PSS), to obtain a part of a physical cell ID, that is, ${N}_{ID}^{\left(2\right)}$ ; obtains orthogonal frequency division multiplexing (OFDM) symbol timing and frequency synchronization; and then detects a secondary synchronization signal (Secondary Synchronization Signal, SSS), to obtain the other part of the physical cell ID, that is, ${N}_{ID}^{\left(1\right)}$ , to obtain the entire physical cell ID, that is, ${N}_{ID}^{cell}$. That is, $PCI = {N}_{ID}^{cell} = 3 {N}_{ID}^{\left(1\right)} + {N}_{ID}^{\left(2\right)}$. Then, the user equipment detects a physical broadcast channel PBCH and a reference signal DMRS for demodulating the PBCH, to obtain a system frame number (System Frame Number) and an SSB index, to further obtain radio frame (subframe) timing.

An SSB period in the NR is configured in a first system information block (System Information Block1, SIB1), and may be 5 ms, 10 ms, 20 ms, 40 ms, 80 ms, or 160 ms. If the UE has not received the SIB1 during initial access, the UE searches for an SSB according to a default period of 20 ms. An SSB does not appear once at regular intervals, but appears in a half frame for several times at regular intervals. This is designed for beam scanning. Each of the several SSBs corresponds to a direction of beam scanning. Finally, there is one SSB in each direction. The several SSBs are referred to as an SSB set, and all SSBs in the SSB set need to be in a same half frame.

In a related technology, a plurality of carriers are a typical operation of a 5G NR network, to enhance a network side capacity. For a Pcell or a Scell, a base station needs to send a periodic SSB, and an SSB period needs to be less than or equal to 20 ms, so that the SSB is successfully found by user equipment that performs initial search. For an intra-band Scell, the base station may send an SSB. In this case, an SSB-related parameter is configured when the Scell is added. Alternatively, an SSB may not be sent. In this case, no SSB-related parameter is configured when the Scell is added, and the terminal obtains timing by using the SSB on the Pcell. For an inter-band Scell, the base station needs to send an SSB, and configure an SSB-related parameter when adding the Scell.

Most of power consumption of an NR network comes from a base station, and 90% of power consumption of an NR base station comes from an active antenna unit (Active Antenna Unit, AAU). Due to reasons such as a higher frequency band, a wider bandwidth, and more TRX, currently, power consumption of a single NR base station is three to four times higher than that of LTE. In addition, in terms of operational expenditure (Operational Expenditure, OPEX), electricity charge of base stations accounts for nearly 20% of entire network operating costs. For some operators, electricity charge accounts for more than half of total profits. Therefore, network energy saving of NR becomes more critical to realize great success of 5G. According to an actual load condition, a base station may implement energy saving measures of different degrees, for example, disable a base station, disable a carrier/a cell, disable a channel, disable an SSB/a beam, disable an antenna/a panel, perform cell discontinuous transmission (cell DTX) and/or cell discontinuous reception (cell DRX), and perform channel state information (Channel State Information, CSI) adaptation.

In a related technology, an SSB is continuously sent according to a fixed period. When there are relatively few user equipments accessing a cell, continuously sending, by the base station, the SSB according to a fixed period is not beneficial to energy saving of a network side device, especially, energy saving of a base station of a second cell. Although some conditions are defined so that an SSB-less cell may not send an SSB, a Scell that does not satisfy a condition still needs to periodically send an SSB. To implement further network energy saving, an SSB mechanism for sending according to an actual requirement of UE needs to be considered on these cells.

An embodiment of this application provides an information transmission method, which can send a reference signal (for example, an SSB) on demand, to save energy of a network side device.

The information transmission method according to the embodiments of this application is described in detail below with reference to the accompanying drawings through some embodiments and application scenarios thereof.

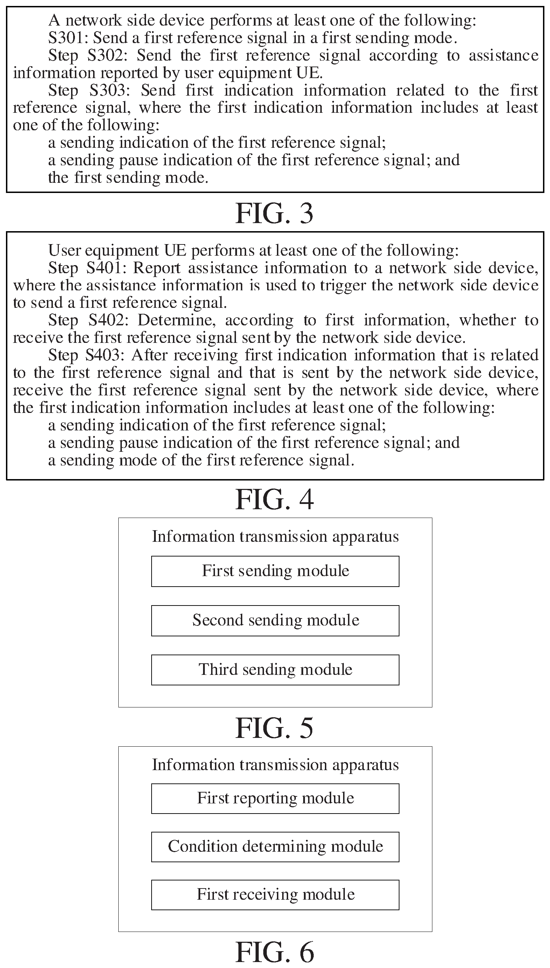

A first aspect of the embodiments of this application provides an information transmission method. FIG. 3 is a flowchart of steps of an information transmission method. As shown in FIG. 3, the information transmission method may include:
performing, by a network side device, at least one of the following:
Step S301: Send a first reference signal in a first sending mode.
Step S302: Send the first reference signal according to assistance information reported by user equipment UE.
Step S303: Send first indication information related to the first reference signal, where the first indication information includes at least one of the following:
   a sending indication of the first reference signal;
   a sending pause indication of the first reference signal; and
   the first sending mode.

It should be noted that, the network side device that sends the reference signal, the network side device that sends the indication information, and the network side device that receives the assistance information of the UE may be a same network side device or may not be a same network side device.

In a possible case, when the network side device is in a secondary cell Scell in an inactive (inactive) state, if the Scell in the inactive state needs to trigger sending of a first reference signal, the UE needs to be informed by using another cell (for example, a cell in an active state); otherwise, the UE does not receive the first reference signal on the Scell in the inactive state. Optionally, the Scell in the inactive state needs to first send related information of the first reference signal to another cell, and then the another cell forwards or notifies the information to the UE. Then, the UE sends feedback information to the another cell, and then the another cell notifies the Scell in the inactive state, or directly sends the feedback information of the UE to the Scell in the inactive state, to help the Scell in the inactive state determine whether to send the first reference signal and a sending moment of sending the first reference signal.

The information related to the first reference signal includes at least one of the following:
used to trigger sending of the first reference signal;
used to indicate a range to which the first reference signal is sent;
a destination terminal to which the first reference signal is sent; and
a sending moment of the first reference signal.

Another cell includes at least one of the following:
a primary cell Pcell of a destination terminal;
a cell in an active active state; and
an active Scell.

The cell in the active state includes: at least one of a primary cell Pcell in the active state or a secondary cell Scell in the active state. Information interaction between the Scell in the inactive state and another cell is performed by using at least one of the following: an Xn interface; an NG interface; an F1 interface; and a wireless backhaul technology.

Optionally, the first reference signal represents a reference signal transmitted between the user equipment UE and a network side device, and is used for synchronization, measurement, demodulation, channel state measurement, phase tracking, and the like, for example, an SSB, a demodulation reference signal (Demodulation Reference Signal, DMRS), a channel state information reference signal CSI-RS, an SSB, a tracking reference signal (Tracking Reference Signal, TRS), or a phase tracking reference signal (PTRS). The user equipment is a terminal device, for example, the terminal in FIG. 1. In this embodiment of this application, the UE may be the terminal device 11 in FIG. 1. For an example of the terminal device 11, refer to the above description, and the terminal device may be UE accessing a primary cell (Primary Cell, Pcell), or UE accessing a secondary cell (Secondary Cell, Scell). This is not limited in this embodiment. In some implementations, the first reference signal is an SSB. In some other implementations, the first reference signal includes at least one of an SSB, a demodulation reference signal DMRS, a channel state information reference signal CSI-RS, a tracking reference signal TRS, and a phase tracking reference signal PTRS.

It should be noted that, the network side device may include a network side device on a satellite, for example, a base station on a satellite, or may include a network side device on ground, for example, a ground base station. In this embodiment, the network side device may perform step S301. That is, the network side device sends the first reference signal to the UE at its discretion according to a specified first sending mode, so that the UE performs synchronization by using the received first reference signal. The first sending mode is different from the fixed sending period. For example, the reference signal is sent in a sending mode in which a time interval gradually increases, so as to reduce unnecessary sending of the reference signal, thereby saving energy of the network side device.

In this embodiment, the network side device may further perform step S302. The network side device sends the first reference signal after receiving the assistance information reported by the UE, to perform interaction between the UE and the network side device. Optionally, the UE may report, according to an actual case of the UE, the assistance information when detecting that the UE needs to synchronize with the network side device, so that the network side device sends the first reference signal (for example, an SSB signal), thereby implementing synchronization between the UE and the network side device according to the first reference signal. Therefore, the network side device does not need to send the first reference signal to the UE according to a fixed period for synchronization, so that the first reference signal is sent according to an actual requirement of the UE, thereby saving energy of the network side device.

In this embodiment, the network side device may further perform step S303. The network side device may send the first indication information related to the first reference signal, to control, according to the first indication information, sending of the first reference signal, pause sending, and update a sending mode of the first reference signal, to flexibly control sending of the reference signal. In an optional embodiment, step S303 of sending first indication information related to the first reference signal includes:
sending, according to the assistance information reported by the UE, the first indication information related to the first reference signal.

In this embodiment, the network side device may send the indication information after receiving the assistance information reported by the UE, so as to send the first reference signal, pause sending, and update a sending mode of the first reference signal according to the indication information, thereby flexibly sending the first reference signal according to an actual requirement of the UE, and saving energy of the network side device.

Optionally, the first indication information may be at least one of an explicit or implicit indication of downlink control information (Downlink Control Information, DCI), a medium access control control element (Medium Access Control Control Element, MAC CE), RRC, and a cell switch indication.

For example, the DCI may be an existing type of DCI, for example, single-cell uplink scheduling DCI such as DCI 0_0/0_1/0_2 or single-cell downlink scheduling DCI such as DCI 1_0/1_1/1_2, may be multi-cell scheduling DCI such as DCI 0_3 or 1_3, may be scheduling DCI, may be non-scheduling DCI, may be new group common DCI, or may reuse existing group common DCI such as DCI 2-9.

For example, the MAC CE may be an existing type of MAC CE, for example, a Scell active MAC CE or a Scell inactive MAC CE, or a MAC CE other than a Scell active MAC CE or a Scell inactive MAC CE, for example, a new type of MAC CE.

A sequence of the foregoing steps S301 to S303 is not limited, and may be set according to an actual requirement.

During specific implementation, for the foregoing step S301 and step S303, there are a plurality of cases of the first sending mode, and different first sending modes may cause a particular difference in the information transmission method provided in this embodiment of this application. In an optional embodiment, the first sending mode includes at least one of the following:
a first sending period of the first reference signal, where the first sending period is greater than 160 milliseconds;
at least two different sending periods of the first reference signal;
a quantity of sending periods of the first reference signal;
a sending manner of the first reference signal, where the sending manner is used to indicate a time domain interval or a quantity of transmissions in a slot used for sending the first reference signal;
sending mode information of the first reference signal, where the sending mode information is used for representing at least one of the following: a sending mode in which a time interval is gradually increased, and a sending mode in which a sending period is not changed; and
sending time information of the first reference signal, including at least one of the following: a sending time window, a sending duration, a sending resource starting location, and a sending resource ending location of the first reference signal.

The sending period represents a time interval at which the network side device sends the first reference signal at an interval of a fixed time. The at least two different sending periods indicate that the sending period is adjustable, and one of the sending periods (for example, a fixed period used for continuous sending in the related technology, or another period different from the fixed period) may be adjusted to another sending period. The quantity of sending periods indicates a quantity of periods in which the network side device sends the first reference signal according to the sending periods. For example, if the sending period is 10 ms and the quantity of sending periods is 5, the network side device sends the first reference signal (one or more first reference signals may be sent each time) once every 10 ms, and after sending the signal in a total of 5 periods, the network side device pauses sending of the first reference signal. The sending manner is used to indicate a time domain interval or a quantity of transmissions in a slot (that is, a time slot) used for sending the first reference signal. For example, two or three first reference signals are specifically sent in one slot, an interval between every two signals is two symbols or there is no interval, or the like. The sending time window indicates sending the first reference signal in a specified time window.

In the following implementation, based on different first sending modes in the foregoing embodiment, the information transmission method involved in step S301 and step S303 is further described.

### Implementation 1-1:

In this implementation, when the network side device performs step S301, the network side device sends the first reference signal according to a specified fixed sending period. For example, the network side device sends the first reference signal once at an interval of 320 ms (the sending period).

In the first sending mode: the sending period of the first reference signal is a specified fixed value (the fixed value is used as a period length to satisfy synchronization/measurement requirements of all UEs), and the sending mode information of the first reference signal is a sending mode in which the sending period is not changed.

It may be understood that a maximum sending period of the current SSB is 160 ms. If a larger sending period is used, energy may be further saved. If the user equipment determines that a synchronization requirement, a measurement requirement, or the like of the user equipment cannot be satisfied in such a sending period, the user equipment triggers the base station to send an additional SSB.

### Implementation 1-2:

In this implementation, when the network side device first performs step S303 and then performs step S301 (that is, the network side device first sends the sending indication of the first reference signal, and then sends the first reference signal), the network side device first sends the first indication information, and then sends the first reference signal in a fixed sending period according to the sending indication or the first sending mode of the first reference signal in the first indication information. In the first sending mode: the sending period of the first reference signal is a specified fixed value (the fixed value is used as a period length to satisfy synchronization/measurement requirements of all UEs), and the sending mode information of the first reference signal is a sending mode in which the sending period is not changed.

### Implementation 2-1:

In this implementation, when the network side device performs step S301, the network side device sends the first reference signal according to a fixed sending period, pauses sending after reaching a specified quantity of sending periods, and resends the first reference signal based on the fixed sending period and the fixed quantity of sending periods after waiting for the first time. The sending period and the quantity of sending periods may be predefined by a protocol or preconfigured by a network side. For example, the network side device sends the first reference signal once at an interval of 160 ms (the sending period), pauses sending of the first reference signal after sending the first reference signal for a total of 5 times (the quantity of sending periods), and resends the first reference signal once at an interval of 160 ms after waiting for 10 s (the first time).

In the first sending mode: a sending period of the first reference signal is a specified fixed value, a quantity of sending periods of the first reference signal is a specified fixed value, and sending mode information of the first reference signal is a sending mode in which the sending period is not changed.

### Implementation 2-2:

In this implementation, when the network side device first performs step S303 and then performs step S301 (that is, the network side device first sends the sending indication of the first reference signal, and then sends the first reference signal), the network side device first sends the first indication information, then sends the first reference signal in a fixed sending period according to the sending indication or the first sending mode of the first reference signal in the first indication information, pauses sending after reaching the specified quantity of sending periods, and resends the first reference signal based on the fixed sending period and the fixed quantity of sending periods after waiting for the first time. In the first sending mode: a sending period of the first reference signal is a specified fixed value, a quantity of sending periods of the first reference signal is a specified fixed value, and sending mode information of the first reference signal is a sending mode in which the sending period is not changed. Implementation 3-1:

In this implementation, when the network side device performs step S301, the network side device gradually prolongs a sending period of the first reference signal until the length of the sending period reaches the period threshold. The network side device pauses sending the first reference signal, and resends the first reference signal according to the sending mode after the first time.

In the first sending mode: the sending period of the first reference signal is a plurality of gradually prolonged sending periods. Quantities of sending periods corresponding to different sending periods may be the same or may be different. For example, the first reference signal is sent for P1 times according to a sending period of 20 ms, then the first reference signal is sent for P2 times according to a sending period of 40 ms, and then the first reference signal is sent for P3 times according to a sending period of 80 ms. Alternatively, P1, P2, and P3 may be different or may be the same. The sending mode information of the first reference signal represents a sending mode in which the time interval gradually increases.

### Implementation 3-2:

In this implementation, when the network side device first performs step S303 and then performs step S301 (that is, the network side device first sends the sending indication of the first reference signal, and then sends the first reference signal), the network side device first sends the first indication information, gradually prolongs a sending period of the first reference signal according to the sending indication or the first sending mode of the first reference signal in the first indication information, when a length of the sending period reaches a period threshold, the network side device pauses sending the first reference signal, and resends the first reference signal according to the sending mode after the first time. In the first sending mode: the sending period of the first reference signal is a plurality of gradually prolonged sending periods. Quantities of sending periods corresponding to different sending periods may be the same or may be different. The sending mode information of the first reference signal represents a sending mode in which a time interval gradually increases.

### Implementation 4-1:

In this implementation, when the network side device performs step S301, the network side device gradually prolongs the sending period of the first reference signal until the length of the sending period reaches the period threshold. The network side device keeps sending the first reference signal according to the current maximum sending period, and resends the first reference signal according to the sending mode after the first time.

In the first sending mode: the sending period of the first reference signal is a plurality of gradually prolonged sending periods. Quantities of sending periods corresponding to different sending periods may be the same or may be different. The sending mode information of the first reference signal represents a sending mode in which the time interval gradually increases. For example, the network side device starts to send the first reference signal, and first sends the signal twice in the sending period of 20 ms. When the first reference signal is sent for the third or fourth time, the interval with the previous first reference signal changes to 40 ms, which is equivalent to switching the sending period of the first reference signal to 40 ms, and then the signal is sent twice, and then according to a same principle, the sending period is switched to 80 ms, until the signal is sent twice in the configured maximum sending period. The first reference signal is continuously sent in the maximum sending period, for example, 640 ms.

### Implementation 4-2:

In this implementation, when the network side device first performs step S303 and then performs step S301 (that is, the network side device first sends the first indication information, that is, the sending indication of the first reference signal, and then sends the first reference signal), the network side device first sends the first indication information, and then gradually prolongs a sending period of the first reference signal according to the sending indication or the first sending mode of the first reference signal in the first indication information, until a length of the sending period reaches a period threshold. The network side device keeps sending the first reference signal in the current maximum sending period, until the network side device sends the first indication information (step S303) and the sending period of the first reference signal is changed according to the first sending mode included in the first indication information or until the UE triggers the network side device to change the sending period (for example, the UE reports the assistance information to the network side device, where the assistance information includes a new sending period of the first reference signal).

In an optional embodiment, the network side device sends the first reference signal or the first indication information according to at least one of the following granularities:
a serving cell;
a serving cell group;
a synchronization signal block SSB frequency channel number;
an SSB frequency channel number group;
a physical cell identifier PCI;
a PCI group;
a measurement object Measurement Object;
a measurement object group;
a beam; and
a beam group.

In this embodiment, when performing step S301 (sending the first reference signal) or step S303 (sending the first indication information), the network side device may perform sending according to different granularities. A serving cell (serving cell) represents a cell that the UE currently accesses. For example, if the cell currently accessed by the UE is a secondary cell Scell, when sending the first reference signal or the first indication information, the network side device may send the first reference signal or the first indication information according to a granularity of the Scell (to all user equipments accessing the Scell), or according to a granularity of a Scell group to which the UE belongs (to all user equipments accessing the Scell group). Alternatively, the network side device may send the first reference signal or the first indication information according to a frequency channel number configured in the SSB or a frequency channel number group configured in the SSB. Alternatively, the SSB frequency channel number and the serving cell are combined as a granularity. That is, the SSB frequency channel number and the PCI are used as a granularity, and the first reference signal or the first indication information is simultaneously sent to all user equipments in a cell corresponding to the frequency channel number configured in the SSB and the PCI.

During specific implementation, for step S302, the network side device sends the first reference signal according to the assistance information reported by the user equipment UE, that is, the UE reports the assistance information to trigger the network side device to send the first reference signal. Due to different requirements of the UE and complex actual cases, there are a plurality of manners of reporting the assistance information by the UE. A different sending mode of the first reference signal of the network side device causes a particular difference in the information transmission method provided in this embodiment of this application. In an optional embodiment, the sending a first reference signal according to assistance information reported by user equipment UE includes at least one of the following:
sending, by the network side device during sending of the first reference signal according to a first sending period, the first reference signal according to the assistance information reported by the UE;
sending, by the network side device, the first reference signal according to a second sending period, pausing sending of the first reference signal after the signal is sent for a first quantity of times, and continuing to send the first reference signal after a first time or according to the assistance information reported by the UE;
gradually prolonging, by the network side device, a sending period of the first reference signal until a length of the sending period reaches a period threshold, pausing, by the network side device, sending of the first reference signal, and continuing to send the first reference signal after a specific time or according to the assistance information reported by the UE; and
gradually prolonging, by the network side device, the sending period of the first reference signal until the length of the sending period reaches the period threshold, keeping sending the first reference signal according to a maximum sending period, until the sending period of the first reference signal is changed according to the assistance information reported by the UE or the first indication information of the network side device, and continuing to send the first reference signal according to a new period.

In the following implementation, based on the foregoing embodiment, the information transmission method involved in step S302 is further described.

### Implementation 5:

In this implementation, when the network side device performs step S302, the network side device does not actively send the first reference signal, until the UE reports the assistance information to trigger the network side device to send the first reference signal. Specifically, step 401 may be performed to send the first reference signal according to the sending mode of the first reference signal indicated by the assistance information, or step 403 may be performed to send a sending indication (first indication information) of the first reference signal, and then send the first reference signal.

### Implementation 6:

In this implementation, the network side device performs step S302 during sending of the first reference signal according to a first sending period (the first reference signal is sent according to the assistance information reported by the UE).

Specifically, during sending of the first reference signal in the first sending period, if the length of the first sending period can meet synchronization, measurement, or other requirements of all UEs, the network side device continues to send the first reference signal according to the first sending period. If some UEs cannot perform synchronization, measurement, or other actions in the first sending period, the assistance information is reported to trigger the network side device to send an additional first reference signal (that is, step S301 of sending the first reference signal is performed, or step 403 of sending a sending indication (the first indication information) of the first reference signal and then sending the first reference signal is performed).

### Implementation 7:

In this implementation, the network side device sends the first reference signal according to the second sending period. After sending the signal for the first quantity of times, the network side device pauses sending the first reference signal until the UE reports the assistance information to trigger the network side device to send the first reference signal (step 402 is performed). The network side device continues to send the first reference signal according to the assistance information reported by the UE (resends the first reference signal in the second sending period until the first quantity of times is reached again). Specifically, the UE reports the assistance information to trigger the network side device to send the first reference signal, and step 401 is performed to send the first reference signal, or step 403 is performed to send the sending indication (the first indication information) of the first reference signal, and then send the first reference signal.

### Implementation 8:

In this implementation, the network side device gradually prolongs the sending period of the first reference signal, until the length of the sending period reaches the period threshold. The network side device pauses sending the first reference signal until the UE reports the assistance information to trigger the network side device to send the first reference signal (step 402 is performed), and continues to send the first reference signal according to the assistance information reported by the UE (the first reference signal is sent again by gradually prolonging the sending period of the first reference signal until the length of the sending period reaches the period threshold). Specifically, the UE reports the assistance information to trigger the network side device to send the first reference signal, and step 401 is performed to send the first reference signal, or step 403 is performed to send the sending indication (the first indication information) of the first reference signal, and then send the first reference signal.

### Implementation 9:

In this implementation, the network side device gradually prolongs the sending period of the first reference signal until the length of the sending period reaches the period threshold, keeps sending the first reference signal according to a maximum sending period, until the UE reports the assistance information to trigger the network side device to send the first reference signal (step 402 is performed), and the sending period of the first reference signal is changed according to the assistance information reported by the UE, and the first reference signal continues to be sent according to a new sending period. If the first reference signal is always sent in a relatively large sending period, some UEs in the cell possibly cannot maintain a synchronization state, and reports assistance information or request information to request the network side device to change to a smaller sending period. The smaller sending period may be indicated by the UE, or may be determined by the network side device according to preconfigured information, or may be determined according to information about a plurality of UEs. In this embodiment of this application, the reporting, by the UE, the assistance information to the network side device may also be expressed as sending request information to the network side device.

Specifically, the UE reports the assistance information (the assistance information may include a sending period of the first reference signal expected by the UE), to trigger the network side device to send the first reference signal, step 401 is performed to send the first reference signal, or step 403 is performed to send the first indication information, where the first indication information may include an updated first sending mode (the sending period of the first reference signal) or a sending indication of the first reference signal, and then send the first reference signal.

In a related technology, a network side device sends a reference signal to each UE in a fixed period for synchronization. However, during actual application, the method of sending a reference signal in a fixed period does not consider an actual requirement of UE, and is not beneficial to network energy saving. To resolve the foregoing problem, this embodiment of this application provides that when the UE has an actual requirement, the UE actively reports the assistance information to the network side device, so that the network side device sends the first reference signal or the first indication information (to instruct to send or pause sending the first reference signal or update a sending period of the first reference signal) according to the received assistance information, thereby implementing sending of the reference signal on demand, and achieving network energy saving. The following embodiment specifically describes the assistance information reported by the UE.

In an optional embodiment, the assistance information reported by the UE includes at least one of the following:
a synchronization capability of the UE;
measurement information of the UE;
second indication information, where the second indication information is used to trigger the network side device to send the first reference signal;
synchronization state information of the UE;
quasi co-location (Quasi Co-location, QCL) information;
a sending mode of the first reference signal expected by the UE;
decoding information of the UE; and
energy saving information of the UE.

Optionally, the assistance information reported by the UE may include second indication information used to trigger the network side device to send the first reference signal. For example, the second indication information may be in a 1-bit form, to instruct the network side device to send the first reference signal. The assistance information reported by the UE may further include a first sending mode expected by the UE, for example, an SSB pattern, which includes information such as a sending period of the first reference signal and a candidate sending resource location.

The assistance information reported by the UE includes the sending mode of the first reference signal expected by the UE. For example, in the foregoing implementation 9, the network side device gradually prolongs the sending period of the first reference signal until the length of the sending period reaches the period threshold, keeps sending the first reference signal according to a maximum sending period, until the UE reports the assistance information (a sending mode of the first reference signal expected by the UE) to trigger the network side device to send the first reference signal (step 402 is performed), and the sending period of the first reference signal is changed according to the assistance information reported by the UE, and the first reference signal continues to be sent according to a new sending period.

Optionally, a minimum or maximum sending period is determined according to assistance information reported by different UEs, so that the first reference signal is sent according to the sending period. The minimum or maximum sending period is predefined by a protocol, preconfigured by a network side device, configured by a network, indicated by a network side device, or determined according to the assistance information reported by the UE.

In an optional embodiment, the synchronization capability of the UE includes at least one of the following:
a longest sending period or a longest sending interval of the first reference signal that is supported when a synchronization state is maintained;
a synchronization signal processing time; and
a synchronization signal type.

During specific implementation, the UE may report the synchronization capability of the UE to the network side device as the assistance information, so that the network side device determines, according to the synchronization capability of the UE, whether to send the first reference signal to the UE. The longest sending period or the longest sending interval indicates that when the UE has not received the first reference signal if the longest sending period or the longest sending interval is exceeded, the UE has difficulty in maintaining a synchronous state. The synchronization signal processing time represents a processing time of the first reference signal by the UE. The synchronization signal type indicates whether the UE supports a synchronization signal type sent by a satellite, or supports a synchronization signal type sent by a base station, or both in terms of the first reference signal. In this embodiment, the network side device may determine, according to the assistance information reported by the UE, a final reference signal sending period, or whether a current reference signal sending mode exceeds a longest sending period or a longest sending interval of the UE. If not, the first reference signal is not sent or the current sending period is not modified. If the longest sending period or the longest sending interval is exceeded, the first reference signal is sent or a smaller sending period meeting a requirement of the UE is selected.

In an optional embodiment, the measurement information of the UE includes at least one of the following:
a measurement object; where the measurement object includes at least one of the following: a DMRS, a CSI-RS, an SSB, a TRS, and a PTRS; and
a measurement result; where the measurement result includes at least one of the following: reference signal received power RSRP, received signal strength indication RSSI, reference signal received quality RSRQ, and a signal-to-interference-noise ratio SINR.

During specific implementation, the UE may report a measurement object and a measurement result of the UE to the network side device as the assistance information, so that the network side device determines, according to the measurement result of the UE, whether to send the first reference signal or the first indication information to the UE. Optionally, when any measurement result of any measurement object of the UE is less than or equal to a preset threshold (which may indicate that a current synchronization state of the UE is poor and is close to asynchronization, and the first reference signal needs to be used for synchronization), the UE reports the assistance information to the network side device, to trigger the network side device to send the first reference signal for synchronization. Alternatively, when any measurement result of any measurement object is greater than a preset threshold (indicating that a current synchronization state of the UE is relatively high, and the first reference signal does not need to be used for synchronization temporarily), the UE reports the assistance information to the network side device, to trigger the network side device to send the first indication information, to instruct to pause sending of the first reference signal.

In an optional embodiment, the synchronization state information of the UE includes at least one of the following:
a sending period of the first reference signal expected by the UE;
a quantity of transmissions or a quantity of repetitions of the first reference signal expected by the UE;
a synchronization state;
a latest time for receiving the first reference signal expected by the UE; and
an offset value of a cyclic prefix CP.

During specific implementation, the UE may report synchronization state information of the UE to the network side device as assistance information, so that the network side device determines, according to the synchronization state of the UE, whether to send the first reference signal or the first indication information to the UE. For example, when the UE considers that a current sending period cannot satisfy a synchronization requirement of the UE, the UE may report a sending period (for example, a period smaller than the current sending period) of the first reference signal expected by the UE to the network side device as the assistance information, to require the network side device to send the first reference signal to the UE according to the period expected by the UE. Optionally, the UE may report, to the network side device, a quantity of transmissions or a quantity of repetitions of the first reference signal expected by the UE as assistance information, so that the network side device updates a sending mode of the first reference signal based on the quantity of transmissions or the quantity of repetitions, and sends the first reference signal in the updated sending mode. Optionally, the UE may report a synchronization state (for example, whether the current UE is in a downlink asynchronization state) of the UE to the network side device. The synchronization state indicates whether the UE is in a synchronization state, and may further include information such as a timing offset, a frequency offset, and a clock synchronization deviation of the UE. Values and levels of these information values may also be used to measure the synchronization state of the UE. For example, if the synchronization deviation value is excessively large, it indicates that the current UE is in a downlink asynchronization state or is close to an asynchronization state, and the network side device may send, according to the reported assistance information, the first reference signal or send the first indication information including a sending indication of the first reference signal. Optionally, the UE may report, to the network side device as assistance information, an expected latest time (for example, a time location or a time offset) at which the first reference signal is received, so that the network side device sends the first reference signal to the UE before the latest time.

In an optional embodiment, the QCL information includes at least one of the following:
an SSB index index; and
reference signal information RS info.

The QCL information may be used by the network side device to determine a beam direction of the first reference signal. During specific implementation, the UE may report the QCL information to the network side device as assistance information, so that the network side device sends the first reference signal in a specific beam direction to the UE according to the QCL information. Optionally, the QCL information may include an SSB index, and the SSB index indicates a specific SSB signal in an SSB set. The QCL information may include RS info, and the RS info is used to indicate a corresponding SSB index.

In an optional embodiment, the decoding information of the UE includes at least one of the following:
a decoding success rate;
a decoding failure rate;
an ACK rate;
a NACK rate;
a quantity of ACKs; and
a quantity of NACKs.

Optionally, the network side device sends data to the UE, and the UE decodes the received data. When a decoding success rate of the UE is relatively low, it indicates that the UE may need to synchronize, to adjust a synchronization state to improve the decoding success rate. The UE reports the decoding information of the UE to the network side device as the assistance information, so that the network side device obtains a current decoding success rate of the UE according to the decoding information of the UE. If the current decoding success rate of the UE is not high, the network side device sends the first reference signal or the first indication information to the UE.

In an optional embodiment, the energy saving information of the UE includes at least one of the following:
an energy saving level;
a battery level or a remaining battery level; and
connected discontinuous reception CDRX information.

During specific implementation, the UE may report the energy saving information of the UE to the network side device as the assistance information, so that the network side device determines, according to the energy saving information of the UE, whether to send the first reference signal or the first indication information to the UE. For example, if the energy saving level of the UE is relatively high, the network side device sends the first reference signal to the UE in a relatively large sending period. If the energy saving level of the UE is relatively low, the network side device sends the first reference signal to the UE in a relatively small sending period.

In an optional embodiment, the assistance information reported by the UE is transmitted by using at least one of the following:
a physical uplink control channel PUCCH;
a physical uplink shared channel PUSCH; and
a wakeup signal WUS.

During specific implementation, the assistance information reported by the UE may be carried in the foregoing signaling. For example, the assistance information may be used as a type of uplink control information (Uplink Control Information, UCI) newly added, and is reported through PUCCH signaling. Alternatively, the information is carried in a medium access control control element (Medium Access Control Control Element, MAC CE), and reported through a PUSCH channel. It may be understood that, a WUS signal generally carries a relatively small amount of information, and may be used to directly indicate the network side device that the first reference signal needs to be sent or a sending period of the first reference signal needs to be changed.

In an optional embodiment, a priority of the assistance information reported by the UE satisfies at least one of the following:
a priority of the assistance information transmitted through the PUCCH is a target priority;
a priority of the assistance information transmitted through the PUSCH is determined according to a priority of the PUSCH; and
a priority of the assistance information reported by the UE is determined according to information carried in the assistance information reported by the UE.

During specific implementation, for different assistance information reported by different UEs, a priority of the assistance information may be determined based on a priority of transmission signaling carrying the assistance information, or a priority of the assistance information may be determined based on information carried in the assistance information. For example, if a priority of PUCCH signaling is set to high, correspondingly, a priority of signaling transmitted by using the PUCCH is determined as high. Alternatively, a priority of indication information is set to A, and a priority of measurement information is set to B, where A is higher B. Therefore, assistance information carrying the indication information that directly triggers sending of the first reference signal has a higher priority than assistance information carrying the measurement information. Optionally, a priority of reporting signaling (for example, a PUCCH or a PUSCH) of the assistance information may be predefined by a protocol, preconfigured by the network side device, or determined based on configuration of the network side device.

In an optional embodiment, the assistance information may be used as a new UCI type, and is reported through PUCCH signaling. A priority of the UCI type satisfies at least one of the following:
HARQ-ACK > assistance information reported by UE >scheduling request (Scheduling Request, SR)> CSI with higher priority > CSI with lower priority;
UE assistance information > HARQ-ACK > SR > CSI with higher priority > CSI with lower priority;
HARQ-ACK > SR > UE assistance information > CSI with higher priority > CSI with lower priority;
HARQ-ACK > SR > CSI with higher priority > UE assistance information > CSI with lower priority; and
HARQ-ACK > SR > CSI with higher priority > CSI with lower priority > UE assistance information.

Optionally, if the UE assistance information is classified into a high priority and a low priority, the UE assistance information of the high priority and the UE assistance information of the low priority may be at different priority locations. For example, high-priority assistance information > CSI with higher priority, and low-priority assistance information < CSI with lower priority.

In an optional embodiment, the network side device sends the first reference signal or a sending indication of the first reference signal when at least one of the following conditions is met:
measurement results corresponding to measurement objects reported by all or at least some UEs reporting the assistance information are less than a threshold;
the UE requests the network side device to send the first reference signal or change a sending period of the first reference signal;
UEs whose quantity is greater than N or whose ratio is greater than Q request the network side device to send the first reference signal or change a sending period of the first reference signal, where N is greater than 0, and Q is greater than 0 and less than 1; and
downlink data arrives at the UE that requests the network side device to send the first reference signal, where optionally, when downlink data arrives at the UE, it indicates that the network side device is to send data to the UE, and the UE needs to maintain a relatively good synchronization state; therefore, in this case, the network side device sends the first reference signal or a sending indication of the first reference signal, so that the UE performs a synchronization operation.

It should be noted that, the measurement result that corresponds to the measurement object and that is reported by the UE may further refer to at least one of a timing offset, a frequency offset value, and a clock synchronization deviation value.

In an optional embodiment, the network side device pauses sending of the first reference signal or sends a sending pause indication of the first reference signal when at least one of the following conditions is met:
the UE reporting the assistance information instructs to stop receiving the first reference signal;
the UE reporting the assistance information indicates CDRX information or state switch information;
measurement results corresponding to measurement objects reported by all or at least some UEs reporting the assistance information are greater than a threshold;
all or at least some UEs reporting the assistance information indicate that the first reference signal is no longer needed;
all or at least some UEs reporting the assistance information indicate that another cell may be used for synchronization;
the network side device no longer receives the assistance information reported by the UE;
a sending time window of the first reference signal ends;
a sending resource ending location of the first reference signal is reached; and
sending is performed for T times according to a maximum sending period, where T is greater than 0, for example, referring to the foregoing implementation 3-1 or implementation 3-2, the network side device gradually prolongs the sending period of the first reference signal until the length of the sending period reaches the period threshold, and the network side device pauses sending the first reference signal or sends a sending pause indication of the first reference signal.

It should be noted that different sending moments of the first reference signal may cause different energy consumption of the network side device or the UE. The following embodiment further describes the sending moment at which the network side device sends the first reference signal.

In an optional embodiment, a sending moment at which the network side device sends the first reference signal is determined according to at least one of the following:
a reference sending moment of the first reference signal; and
a time offset time offset.

In this embodiment, the sending moment at which the network side device sends the first reference signal is a starting time for sending the first reference signal. Optionally, the network side device starts to send the first reference signal at a location of a reference point (that is, the reference sending moment) + a time offset. This mainly applies to the following several cases:
Case 1. The network side device sends the first reference signal as soon as possible after receiving the assistance information reported by the UE, without considering a sending time of the first reference signal determined with another UE. In this case, the first reference signal is similar to UE specific. However, if a plurality of UEs request the first reference signal (report the assistance information to the network side device) at different times, the network side device needs to send a plurality of first reference signals, which is not beneficial to saving energy consumption of the network side device.
Case 2. After receiving the assistance information reported by the UE, the network side device determines a starting sending time (that is, a sending moment) of a first reference signal according to the assistance information reported by different UEs. In this case, time offsets indicated for the different UEs may be different, to facilitate unified understanding of the starting sending time of the first reference signal by the UEs.
Case 3. The network side device determines a starting sending time (that is, a sending moment) of a first reference signal, and time offsets indicated for different UEs may be different, to facilitate unified understanding of the sending time of the first reference signal.
Case 4. A sending resource location at which the network side device sends the first reference signal is a candidate sending resource location of a preconfigured location.
   The network side device does not start sending the first reference signal at a location of the reference point + the time offset. This mainly applies to the following several cases:
Case 5. The time offset is indicated by the UE, and indicates a sending resource location of an expected first reference signal. However, to save power as much as possible, the network side device determines a suitable sending resource location of the first reference signal for requests (reported assistance information) of a plurality of UEs. Therefore, for some UEs, the network side device may not send the first reference signal at the location of the reference point + the time offset. In this case, these UEs need to always search for the first reference signal from the location of the reference point + the time offset in the time domain, which causes a waste of power consumption.
Case 6. The network side device always sends the first reference signal at a preconfigured candidate sending resource location of the first reference signal, and the reference point + the time offset is used to determine a specific candidate sending resource location at which the network side device sends the first reference signal. For example, the network side device sends the first reference signal at a next candidate sending resource location that satisfies a particular processing time and that is from the reference point + the time offset. Compared with the sending manner in case 5, power consumption of the UE can be further reduced in case 6.

In an optional embodiment, the reference sending moment of the first reference signal is determined according to at least one of the following:
a moment at which the network side device sends the first indication information;
a moment at which the UE reports the assistance information; and
a candidate sending moment predefined by a protocol or preconfigured by the network side device.

During specific implementation, there are two reference sending moments (sending locations) of the first reference signal. One type is flexible sending, that is, the reference sending moment is determined according to a moment at which the network side device sends the first indication information, or the reference sending moment is determined according to a moment at which the UE reports the assistance information. The other type is sending at a preconfigured moment or resource location, that is, a candidate sending moment or a candidate sending resource location of the first reference signal is pre-defined by a protocol or preconfigured by the network side device. For example, a bitmap is used for indication, or a start moment or a resource location is determined by using DFN/SFN index + symbol index, and then repetition is performed according to a preconfigured period, to obtain a candidate sending moment or a candidate sending resource location of the first reference signal. When sending the first reference signal, the first reference signal is always sent at the candidate sending moment or the candidate sending resource location.

In an optional embodiment, the time offset time offset is determined according to at least one of the following:
a processing time for processing the first indication information by the UE;
a processing time for processing, by the network side device, a HARQ-ACK sent by the UE;
a preparing time for the network side device to send the first reference signal;
a processing time for processing, by the network side device, the assistance information reported by the UE;
a first time, where the first time represents an additional processing time predefined by a protocol;
a second time, where the second time represents a time reserved for unified first reference signal sending;
indicated by the UE;
indicated by the network side device;
predefined by a protocol; and
preconfigured by the network side device.

In this embodiment of this application, each preparing time may be expressed as a processing time. For example, the preparing time for the network side device to send the first reference signal may also be explained as a processing time for the network side device to send the first reference signal. Based on the foregoing embodiment, for the sending moment at which the network side device sends the first reference signal, one of the following four solutions is satisfied.

Solution 1: Based on the foregoing case 1, after receiving the assistance information reported by any UE, the network side device triggers sending of the first reference signal without considering a sending time of the first reference signal determined with another UE. In this case, it is set that the sending moment (that is, the starting sending time) at which the network side device sends the first reference signal is n1+k1, the reference sending moment (the time at which the network side device sends the indication of the first reference signal, that is, the moment at which the network side device sends the first indication information) is n1, and the time offset time offset is k1. In solution 1, k1 includes at least one of the following:
a processing time for processing the first indication information by the UE;
a processing time for processing, by the network side device, a HARQ-ACK sent by the UE; where specifically, if the network side device first sends the first indication information (including the sending indication of the first reference signal) and then sends the first reference signal, considering that the network side device sends the first indication information to the UE, after successfully receiving and understanding the information, the UE sends a HARQ-ACK to the network side device; therefore, k1 includes a processing time of the HARQ-ACK by the network side device;
a preparing time for the network side device to send the first reference signal; and
a first time.

Optionally, k1 may be indicated by the network side device, predefined by a protocol, or preconfigured by the network side device.

Solution 2: Based on the foregoing case 1, after receiving the assistance information reported by any UE, the network side device triggers sending of the first reference signal without considering a sending time of the first reference signal determined with another UE. In this case, the network side device may not send the first indication information, and directly send the first reference signal. In this case, it is set that the sending moment (that is, the starting sending time) at which the network test device sends the first reference signal is n2+k2, the reference sending moment (that is, the moment at which the UE reports the assistance information) is n2, and the time offset time offset is k2. In solution 2, k2 includes at least one of the following:
a processing time for processing, by the network side device, the assistance information reported by the UE;
a preparing time for the network side device to send the first reference signal; and
a first time.

Optionally, k2 may be indicated by the UE, predefined by a protocol, or preconfigured by the network side device.

It should be noted that, in this case, the network side device may alternatively send the first indication information, for example, which only indicates sending information about the first reference signal to a terminal that currently sends the assistance information. In this case, the sending moment at which the network side sends the first reference signal is n2+k2, or may be n1+k1 (as defined in solution 1).

Solution 3: Based on the foregoing case 2, after receiving assistance information reported by a plurality of UEs, to save energy, the network side device determines a unified starting sending time (that is, a sending moment) of a first reference signal according to the assistance information reported by different UEs. Otherwise, the UE may search for the first reference signal in advance blindly, causing a waste of power consumption. In this case, the network side device may not send the first indication information, and directly send the first reference signal. In this case, it is set that the sending moment (that is, the starting sending time) at which the network test device sends the first reference signal is n3+k3, the reference sending moment (that is, the moment at which the UE reports the assistance information) is n3, and the time offset time offset is k3. In solution 3, k3 includes at least one of the following:
a processing time for processing the first indication information by the UE;
a preparing time for the network side device to send the first reference signal;
the first time; and
the second time.

Optionally, k3 is indicated by the UE, indicated by the network side device, predefined by a protocol, or preconfigured by the network side device.

Solution 4: Based on the foregoing case 2, after receiving assistance information reported by a plurality of UEs, to save energy, the network side device determines a unified starting sending time (that is, a sending moment) of a first reference signal according to the assistance information reported by different UEs. Otherwise, the UE may search for the first reference signal in advance blindly, causing a waste of power consumption. In this case, it is set that the sending moment (that is, the starting sending time) at which the network side device sends the first reference signal is n4+k4, the reference sending moment (the time at which the network side device sends the first indication information) is n4, and the time offset time offset is k4.

In solution 4, k4 includes at least one of the following:
a processing time for processing, by the network side device, the assistance information reported by the UE;
a processing time for processing the first indication information by the UE;
a processing time for processing, by the network side device, a HARQ-ACK sent by the UE; where specifically, if the network side device first sends the first indication information (including the sending indication of the first reference signal) and then sends the first reference signal, considering that the network side device sends the first indication information to the UE, after successfully receiving and understanding the information, the UE sends a HARQ-ACK to the network side device; therefore, k4 includes a processing time of the HARQ-ACK by the network side device;
a preparing time for the network side device to send the first reference signal;
a first time; and
a second time.

Optionally, k4 is indicated by the UE, indicated by the network side device, predefined by a protocol, or preconfigured by the network side device.

A second aspect of the embodiments of this application provides an information transmission method. The method is applied to user equipment UE. Referring to FIG. 4, FIG. 4 is a flowchart of steps of another information transmission method. As shown in FIG. 4, the information transmission method includes:
performing, by user equipment UE, at least one of the following:

Step S401: Report assistance information to a network side device, where the assistance information is used to trigger the network side device to send a first reference signal.

Step S402: Determine, according to first information, whether to receive the first reference signal sent by the network side device.

Step S403: After receiving first indication information that is related to the first reference signal and that is sent by the network side device, receive the first reference signal sent by the network side device, where the first indication information includes at least one of the following:
a sending indication of the first reference signal;
a sending pause indication of the first reference signal; and
a sending mode of the first reference signal.

In a related technology, a network side device mainly sends a reference signal to each UE in a fixed period for synchronization, measurement (cell measurement and channel measurement), phase tracking, demodulation, and the like. However, during actual application, the method of sending a reference signal in a fixed period does not consider an actual requirement of UE, and is not beneficial to network energy saving. To resolve the foregoing problem, this embodiment of this application provides that the UE may perform step S401 according to an actual case of the UE when determining to perform an action such as synchronization or measurement with the network side device. The UE reports the assistance information to the network side device, to trigger the network side device to send the first reference signal or the first indication information (to instruct to send or pause sending the first reference signal or update a sending period of the first reference signal), thereby implementing sending of the reference signal on demand, and achieving energy saving of the network side device.

In addition, the network side device may send the first indication information (including the sending indication of the first reference signal) after receiving the assistance information reported by the UE, so that the UE performs step S403. Specifically, the UE returns a HARQ-ACK message to the network side device according to the received first indication information, the network side device sends the first reference signal, and the UE receives the first reference signal. In this process, the network side device may send the first indication information related to the first reference signal, to indicate sending of the first reference signal, pause sending, and update a sending mode of the first reference signal, to flexibly control sending of the reference signal.

In an optional embodiment, within a period of time that is predefined or preconfigured by the network side, or in a sending behavior or a sending period of the first reference signal of the network side device, after the UE deems/expects/assumes that the first reference signal is received, the UE does not need to receive the signal again, or the UE deems/expects/assumes that the first reference signal is received only once. The sending behavior of the first reference signal of the network side device includes: sending one or more first reference signals. For example, a sending behavior of the first reference signal of the network side device corresponds to a transmission of the first reference signal in a sending mode triggered by the network side device or the UE.

A sequence of the foregoing steps S401 to S403 is not limited, and may be set according to an actual requirement.

In an optional embodiment, the receiving, by the UE, the first reference signal sent by the network side device includes:
determining, by the UE, a sending moment of the first reference signal according to at least one of the following: a reference sending moment of the first reference signal; and a time offset time offset; and
receiving or measuring, by the UE, the first reference signal at the sending moment of the first reference signal.

In this embodiment, after the UE performs step S401, that is, reports the assistance information to the network side device, to trigger the network side device to send the first reference signal, the UE needs to determine the sending moment of the first reference signal, to receive, at the sending moment, the first reference signal sent by the network side device. In a possible implementation, the UE may determine the sending moment according to the reference sending moment and the time offset time offset. A specific method for determining the sending moment is described in the foregoing embodiment for the sending moment, and details are not described in this embodiment again. In another possible implementation, the UE may directly determine the sending moment according to a sending period or a sending mode of the first reference signal that is indicated by the network side device, preconfigured by the network side device, or predefined by a protocol. This embodiment of this application provides that the UE reports the assistance information to the network side device, to trigger sending of the first reference signal, and searches for the first reference signal at the determined sending moment to receive the first reference signal, to send the first reference signal on demand. The first reference signal may be sent on demand when the network side device sends the first reference signal by using an excessively large period or time interval to save energy, or directly does not send the reference signal, to avoid affecting synchronization, measurement, phase tracking, demodulation, and the like of the UE.

In an optional embodiment, the reference sending moment of the first reference signal is determined according to at least one of the following:
a moment at which the network side device sends the first indication information;
a moment at which the UE reports the assistance information; and
a candidate sending moment predefined by a protocol or preconfigured by the network side device.

In an optional embodiment, the time offset time offset is determined according to at least one of the following:
a processing time for processing the first indication information by the UE;
a processing time for processing, by the network side device, a HARQ-ACK sent by the UE;
a preparing time for the network side device to send the first reference signal;
a processing time for processing, by the network side device, the assistance information reported by the UE;
a first time, where the first time represents an additional processing time predefined by a protocol;
a second time, where the second time represents a time reserved for unified SSB sending;
indicated by the UE;
indicated by the network side device;
predefined by a protocol; and
preconfigured by the network side device.

It may be understood that the time offset is a value greater than or equal to 0. The time unit may be radio frame, sub-frame, slot, mini-slot, second, millisecond, or the like.

In an optional embodiment, the determining, by the UE according to first information, whether to receive the first reference signal sent by the network side device includes:
performing, by the UE, a first behavior according to the first information; where the first behavior includes at least one of the following:
receiving the first reference signal;
sending a first sending object, where the first sending object includes at least one of the following: a PUCCH, a PUSCH, a physical random access channel PRACH, and a sounding reference signal SRS; and
receiving a first receiving object, where the first receiving object includes at least one of the following: a physical downlink control channel PDCCH, a physical downlink shared channel PDSCH, a CSI-RS, a TRS, and a PTRS.

In this embodiment, in a process in which the UE receives the first reference signal sent by the network side device, a collision such as at least partial overlap between a sending location of the first reference signal and the first sending object or the first receiving object easily occurs. Specifically, when the network side device sends the first reference signal, at the resource location of the first reference signal, the UE may have or may be scheduled for other UL transmission or DL reception. Due to half-duplex, in a case of colliding with UL transmission, whether to receive the first reference signal or perform uplink transmission (sending the first sending object) needs to be selected. In a case of colliding with DL reception, from the perspective of reliability, the UE may need to select whether to receive the first reference signal or perform other DL reception (receiving the first receiving object). Therefore, a behavior to be preferentially performed needs to be determined according to a condition satisfied in a current actual case or first information.

In an optional embodiment, the first information according to which the UE performs the first behavior includes at least a first condition and first target information; and the performing, by the UE, a first behavior according to the first information includes at least one of the following:
preferentially receiving, by the UE, the first reference signal according to the first target information; and
preferentially receiving, by the UE, the first reference signal when the first condition is met, where the first condition includes at least one of the following:
   the UE has requested the first reference signal from the network side device; where it may be understood that because the UE requests a sending behavior, the UE preferentially receives the first reference signal;
   the first reference signal is sent by the network side device for the first time;
   a measurement result of a first object by the UE is less than a threshold; where it may be understood that, if the measurement result of the first object is less than the threshold, it indicates that the UE needs to receive the first reference signal to perform at least one behavior such as synchronization, measurement, demodulation, and phase tracking; therefore, the UE preferentially receives the first reference signal;
   the UE is no longer synchronized;
   the UE is close to asynchronization; where for example, if the UE is no longer synchronized or is close to asynchronization, the first condition is met, and the first reference signal is preferentially received; and if the synchronization state of the UE is relatively good, the first reference signal is received at a low priority, and the first receiving object is preferentially received or the first sending object is preferentially sent;
   a sending period of the first reference signal is greater than or equal to a longest sending period or a longest sending interval of the first reference signal that is supported by the synchronization capability of the UE;
   a sending period of the first reference signal is greater than a period threshold;
   the first reference signal is not received within a first time window or a second time segment; where the first time window and the second time segment are determined according to a synchronization requirement, a measurement requirement, or a state of the UE;
   the sending moment of the first reference signal at least partially overlaps with a sending moment of the first sending object;
   the sending moment of the first reference signal at least partially overlaps with a sending moment of the first receiving object;
   the first sending object or the first receiving object is control information;
   the first sending object or the first receiving object includes control information;
   a priority of an uplink UL is greater than or equal to a first threshold or less than or equal to a second threshold; where it may be understood that, whether to preferentially receive the first reference signal is determined according to a preconfigured priority;
   a priority of a downlink DL is greater than or equal to a third threshold or less than or equal to a fourth threshold; where it may be understood that, whether to preferentially receive the first reference signal is determined according to a preconfigured priority;
   the sending moment of the first reference signal at least partially overlaps a sending moment of the first sending object that meets a third condition; and
   the sending moment of the first reference signal at least partially overlaps with a sending moment of the first receiving object that meets the third condition; where
   the third condition includes at least one of the following:
      the first sending object or the first receiving object is located in a Scell;
      the first sending object or the first receiving object is located in a Pcell;
      the first sending object or the first receiving object is transmitted for the first time; and
      the first sending object or the first receiving object is retransmitted; and
      the first target information includes at least one of the following:
         whether a transmission resource of the first sending object or the first receiving object is dynamic grant DG; where for example, when the transmission resource of the first sending object or the first receiving object is DG, the first sending object is preferentially sent or the first receiving object is preferentially received, it may be understood that, in this case, a receiving or sending priority of a dynamic grant resource is considered to be higher, and certainly, if it is preconfigured that or the terminal determines that a receiving or sending priority of a dynamic grant resource is lower, the first reference signal is preferentially received;
         whether a transmission resource of the first sending object or the first receiving object is configuration grant CG; where for example, when the transmission resource of the first sending object or the first receiving object is CG, a priority of receiving the first reference signal is higher than that of sending the first sending object or receiving the first receiving object, it may be understood that, in this case, a receiving or sending priority of a static scheduling resource is considered to be lower, and certainly, if it is preconfigured that or the terminal determines that a receiving or sending priority of a static scheduling resource is higher, the first sending object is preferentially sent or the first receiving object is preferentially received;
         whether the first reference signal is triggered by the UE; where for example, if the first reference signal is triggered by the UE (the UE reports the assistance information to trigger the network side device to send the first reference signal), the first reference signal is preferentially received;
         a purpose for receiving the first reference signal; where for example, if the purpose for receiving the first reference signal is synchronization (or activation or de-measurement), the first reference signal is preferentially received, and if the purpose for receiving the first reference signal is measurement, the first reference signal is not preferentially received;
         synchronization state information of the UE; where for example, if a synchronization deviation value of the UE is greater than a threshold, the first reference signal is preferentially received; otherwise, the signal is not preferentially received;
         measurement information of the UE;
         a sending mode of the first reference signal, where for example, if the sending mode of the first reference signal is a sending mode of repeatedly sending for a plurality of times, the first reference signal is not preferentially received, and if the sending mode is a sending mode of sending only once, the first reference signal is preferentially received; and
         whether the first reference signal can be received within a first time segment.

The first sending object is at least one of the following: a CG PUSCH; a DG PUSCH; an SRS; a PUCCH carrying a CSI report; a PUCCH not carrying a HACK-ACK or an SR; a PUCCH; where optionally, the first sending object may be a sending object in a Scell only, or may be a sending object in a Pcell or a Scell.

The first receiving object is at least one of the following: a PDSCH; a CSI-RS; and a PDCCH.

In an optional embodiment, the first information according to which the UE performs the first behavior includes at least a second condition and second target information; and the performing, by the UE, a first behavior according to the first information includes at least one of the following:
preferentially sending, by the UE, a priority of the first sending object or preferentially receiving the first receiving object according to the second target information; and
preferentially sending, by the UE, the priority of the first sending object or preferentially receiving the first receiving object when the second condition is satisfied, where the second condition includes at least one of the following:
   the UE has not requested the first reference signal from the network side device; where it may be understood that, in this case, the UE may not need to receive the first reference signal to perform a behavior such as synchronization or measurement;
   the first reference signal is not sent by the network side device for the first time; where for example, the first reference signal is an SSB and a currently received SSB belongs to an L^{th} SSB period, L > 1, it may be understood that, in this case, the UE may already receive the first reference signal, that is, in a period of time or a sending behavior or a sending period of the first reference signal of the network side device, after the UE deems/expects/assumes that the first reference signal is received, the UE does not need to receive the signal again, or the UE deems/expects/assumes that the first reference signal is received only once;
   a measurement result of a first object by the UE is greater than a threshold;
   the UE implements synchronization by using another cell;
   a synchronization state level of the UE is greater than a preset state level;
   a sending period of the first reference signal is less than a period threshold;
   the first reference signal can be received within a first time window or a second time segment; where it may be understood that subsequently, the UE may further receive the first reference signal;
   the sending moment of the first reference signal at least partially overlaps with a sending moment of the first sending object;
   the sending moment of the first reference signal at least partially overlaps with a sending moment of the first receiving object;
   the first sending object or the first receiving object is control information; where for example, when the first sending object or the first receiving object is control information, a priority of sending the first sending object or receiving the first receiving object is higher than that of receiving the first reference signal;
   the first sending object or the first receiving object includes control information;
   a priority of an uplink UL is less than or equal to a first threshold or greater than or equal to a second threshold;
   a priority of a downlink DL is less than or equal to a third threshold or greater than or equal to a fourth threshold;
   the sending moment of the first reference signal at least partially overlaps a sending moment of the first sending object that meets a fourth condition; and
   the sending moment of the first reference signal at least partially overlaps with a sending moment of the first receiving object that meets the fourth condition; where
   the fourth condition includes at least one of the following:
      the first sending object or the first receiving object is located in a Scell;
      the first sending object or the first receiving object is located in a Pcell; where for example, it may be set that when the first sending object or the first receiving object is located in the Pcell, a priority of sending the first sending object or receiving the first receiving object is higher than that of receiving the first reference signal;
      the first sending object or the first receiving object is transmitted for the first time; where it may be understood that, in this case, a priority of transmission for the first time is considered as relatively high; and
      the first sending object or the first receiving object is retransmitted; where it may be understood that, in this case, it is considered that a priority of retransmission is relatively high because reception for transmission for the first time is not successful.

The second target information includes at least one of the following:
whether a transmission resource of the first sending object or the first receiving object is DG; where for example, when the first sending object or the first receiving object is DG, a priority of sending the first sending object or receiving the first receiving object is higher than that of receiving the first reference signal;
whether a transmission resource of the first sending object or the first receiving object is CG;
whether the first reference signal is triggered by the UE;
whether the first reference signal can be received within a first time segment;
a purpose for receiving the first reference signal;
synchronization state information of the UE;
measurement information of the UE; and
a sending mode of the first reference signal.

In this embodiment, different conditions (the first condition or the second condition) also have different priorities, and may be predefined by a protocol, preconfigured by a network side device, configured by a network side device, indicated by a network side device, or the like. For example, if the UE triggers the network side device to send the first reference signal, regardless of a condition met for uplink transmission or downlink reception, the first reference signal is always preferentially received.

The following embodiment is used to describe specific content included in the assistance information reported by the UE. The assistance information provided in the following embodiment is the same as the assistance information described in the embodiment of the network side device, and no further explanation is made in this embodiment again.

In an optional embodiment, the assistance information includes at least one of the following:
a synchronization capability of the UE;
measurement information of the UE;
second indication information, where the second indication information is used to trigger the network side device to send the first reference signal;
synchronization state information of the UE;
QCL information;
a sending mode of the first reference signal expected by the UE;
decoding information of the UE; and
energy saving information of the UE.

In an optional embodiment, the synchronization capability of the UE includes at least one of the following:
a longest sending period or a longest sending interval of the first reference signal that is supported when a synchronization state is maintained;
a synchronization signal processing time; and
a synchronization signal type.

In an optional embodiment, the measurement information of the UE includes at least one of the following:
a measurement object; where the measurement object includes at least one of the following: a DMRS, a CSI-RS, an SSB, a TRS, and a PTRS; and
a measurement result; where the measurement result includes at least one of the following: RSRP, RSSI, RSRQ, and a SINR.

In an optional embodiment, the method further includes at least one of the following:
sending and reporting assistance information to the network side device when a measurement result of a measurement object is less than a threshold; and
sending and reporting the assistance information to the network side device when the measurement result of the measurement object is not less than the threshold.

In an optional embodiment, the synchronization state information of the UE includes at least one of the following:
a sending period of the first reference signal expected by the UE;
a synchronization state;
a latest time for receiving the first reference signal expected by the UE; and
an offset value of a CP.

In an optional embodiment, the QCL information includes at least one of the following:
an SSB index index; and
RS info.

In an optional embodiment, the decoding information of the UE includes at least one of the following:
a decoding success rate;
a decoding failure rate;
an ACK rate;
a NACK rate;
a quantity of ACKs; and
a quantity of NACKs.

In an optional embodiment, the energy saving information of the UE includes at least one of the following:
an energy saving level;
a battery level or a remaining battery level; and
CDRX information.

In an optional embodiment, the sending mode of the first reference signal includes at least one of the following:
a first sending period of the first reference signal, where the first sending period is greater than 160 milliseconds;
at least two different sending periods of the first reference signal;
a quantity of sending periods of the first reference signal;
a sending manner of the first reference signal, where the sending manner is used to indicate a time domain interval or a quantity of transmissions in a slot used for sending the first reference signal; and
sending mode information of the first reference signal, where the sending mode information is used for representing at least one of the following: a sending mode in which a time interval is gradually increased, and a sending mode in which a sending period is not changed.

A third aspect of the embodiments of this application provides an information transmission apparatus. FIG. 5 is a schematic structural diagram of an information transmission apparatus. As shown in FIG. 5, the apparatus may be applied to a network side device. The apparatus includes:
a first sending module, configured to send a first reference signal in a first sending mode;
a second sending module, configured to send the first reference signal according to assistance information reported by user equipment UE; and
a third sending module, configured to send first indication information related to the first reference signal, where the first indication information includes at least one of the following:
   a sending indication of the first reference signal;
   a sending pause indication of the first reference signal; and
   the first sending mode.

In an optional embodiment, the third sending module includes:
a first indication information sending submodule, configured to send, according to the assistance information reported by the UE, the first indication information related to the first reference signal.

In an optional embodiment, the network side device sends the first reference signal or the first indication information according to at least one of the following granularities:
a serving cell;
a serving cell group;
a synchronization signal block SSB frequency channel number;
an SSB frequency channel number group;
a physical cell identifier PCI;
a PCI group;
a measurement object Measurement Object;
a measurement object group;
a beam; and
a beam group.

In an optional embodiment, the assistance information reported by the UE includes at least one of the following:
a synchronization capability of the UE;
measurement information of the UE;
second indication information, where the second indication information is used to trigger the network side device to send the first reference signal;
synchronization state information of the UE;
QCL information;
a sending mode of the first reference signal expected by the UE;
decoding information of the UE; and
energy saving information of the UE.

In an optional embodiment, the synchronization capability of the UE includes at least one of the following:
a longest sending period or a longest sending interval of the first reference signal that is supported when a synchronization state is maintained;
a synchronization signal processing time; and
a synchronization signal type.

In an optional embodiment, the measurement information of the UE includes at least one of the following:
a measurement object; where the measurement object includes at least one of the following: a demodulation reference signal DMRS, a channel state information reference signal CSI-RS, an SSB, a tracking reference signal TRS, and a phase tracking reference signal PTRS; and
a measurement result; where the measurement result includes at least one of the following: reference signal received power RSRP, received signal strength indication RSSI, reference signal received quality RSRQ, and a signal-to-interference-noise ratio SINR.

In an optional embodiment, the synchronization state information of the UE includes at least one of the following:
a sending period of the first reference signal expected by the UE;
a quantity of transmissions or a quantity of repetitions of the first reference signal expected by the UE;
a synchronization state;
a latest time for receiving the first reference signal expected by the UE; and
an offset value of a cyclic prefix CP.

In an optional embodiment, the QCL information includes at least one of the following:
an SSB index index; and
reference signal information RS info.

In an optional embodiment, the decoding information of the UE includes at least one of the following:
a decoding success rate;
a decoding failure rate;
an ACK rate;
a NACK rate;
a quantity of ACKs; and
a quantity of NACKs.

In an optional embodiment, the energy saving information of the UE includes at least one of the following:
an energy saving level;
a battery level or a remaining battery level; and
connected discontinuous reception CDRX information.

In an optional embodiment, the first sending mode includes at least one of the following:
a first sending period of the first reference signal, where the first sending period is greater than 160 milliseconds;
at least two different sending periods of the first reference signal;
a quantity of sending periods of the first reference signal;
a sending manner of the first reference signal, where the sending manner is used to indicate a time domain interval or a quantity of transmissions in a slot used for sending the first reference signal;
sending mode information of the first reference signal, where the sending mode information is used for representing at least one of the following: a sending mode in which a time interval is gradually increased, and a sending mode in which a sending period is not changed; and
sending time information of the first reference signal, including at least one of the following: a sending time window, a sending duration, a sending resource starting location, and a sending resource ending location of the first reference signal.

In an optional embodiment, the network side device sends the first reference signal or a sending indication of the first reference signal when at least one of the following conditions is met:
measurement results corresponding to measurement objects reported by all or at least some UEs reporting the assistance information are less than a threshold;
the UE requests the network side device to send the first reference signal or change a sending period of the first reference signal;
UEs whose quantity is greater than N or whose ratio is greater than Q request the network side device to send the first reference signal or change a sending period of the first reference signal, where N is greater than 0, and Q is greater than 0 and less than 1; and
downlink data arrives at the UE that requests the network side device to send the first reference signal.

In an optional embodiment, the network side device pauses sending of the first reference signal or sends a sending pause indication of the first reference signal when at least one of the following conditions is met:
the UE reporting the assistance information instructs to stop receiving the first reference signal;
the UE reporting the assistance information indicates CDRX information or state switch information;
measurement results corresponding to measurement objects reported by all or at least some UEs reporting the assistance information are greater than a threshold;
all or at least some UEs reporting the assistance information indicate that the first reference signal is no longer needed;
all or at least some UEs reporting the assistance information indicate that another cell may be used for synchronization;
the network side device no longer receives the assistance information reported by the UE;
a sending time window of the first reference signal ends;
a sending resource ending location of the first reference signal is reached; and
sending is performed for T times according to a maximum sending period, where T is greater than 0.

In an optional embodiment, the assistance information reported by the UE is transmitted by using at least one of the following:
a physical uplink control channel PUCCH;
a physical uplink shared channel PUSCH; and
a wakeup signal WUS.

In an optional embodiment, a priority of the assistance information reported by the UE satisfies at least one of the following:
a priority of the assistance information transmitted through the PUCCH is a target priority;
a priority of the assistance information transmitted through the PUSCH is determined according to a priority of the PUSCH; and
a priority of the assistance information reported by the UE is determined according to information carried in the assistance information reported by the UE.

In an optional embodiment, the second sending module includes at least one of the following:
a first sending submodule, configured to send, during sending of the first reference signal according to a first sending period, the first reference signal according to the assistance information reported by the UE;
a second sending submodule, configured to send, by the network side device, the first reference signal according to a second sending period, pause sending of the first reference signal after the signal is sent for a first quantity of times, and continue to send the first reference signal after a first time or according to the assistance information reported by the UE;
a third sending submodule, configured to gradually prolong, by the network side device, a sending period of the first reference signal until a length of the sending period reaches a period threshold, pause, by the network side device, sending of the first reference signal, and continue to send the first reference signal after a specific time or according to the assistance information reported by the UE; and
a fourth sending submodule, configured to gradually prolong, by the network side device, the sending period of the first reference signal until the length of the sending period reaches the period threshold, keep sending the first reference signal according to a maximum sending period, until the sending period of the first reference signal is changed according to the assistance information reported by the UE or the first indication information of the network side device, and continue to send the first reference signal according to a new period.

In an optional embodiment, a sending moment at which the network side device sends the first reference signal is determined according to at least one of the following:
a reference sending moment of the first reference signal; and
a time offset time offset.

In an optional embodiment, the reference sending moment of the first reference signal is determined according to at least one of the following:
a moment at which the network side device sends the first indication information;
a moment at which the UE reports the assistance information; and
a candidate sending moment predefined by a protocol or preconfigured by the network side device.

In an optional embodiment, the time offset time offset is determined according to at least one of the following:
a processing time for processing the first indication information by the UE;
a processing time for processing, by the network side device, a HARQ-ACK sent by the UE;
a preparing time for the network side device to send the first reference signal;
a processing time for processing, by the network side device, the assistance information reported by the UE;
a first time, where the first time represents an additional processing time predefined by a protocol;
a second time, where the second time represents a time reserved for unified SSB sending;
indicated by the UE;
indicated by the network side device;
predefined by a protocol; and
preconfigured by the network side device.

A fourth aspect of the embodiments of this application provides an information transmission apparatus. FIG. 6 is a schematic structural diagram of another information transmission apparatus. As shown in FIG. 6, the apparatus may be applied to user equipment UE. The apparatus includes:
a first reporting module, configured to report assistance information to a network side device, where the assistance information is used to trigger the network side device to send a first reference signal;
a determining module, configured to determine, according to first information, whether to receive the first reference signal sent by the network side device; and
a first receiving module, configured to: after receiving first indication information that is related to the first reference signal and that is sent by the network side device, receive the first reference signal sent by the network side device, where the first indication information includes at least one of the following:
   a sending indication of the first reference signal;
   a sending pause indication of the first reference signal; and
   a sending mode of the first reference signal.

In an optional embodiment, the first receiving module includes:
a sending moment determining submodule, configured to determine, by the UE, a sending moment of the first reference signal according to at least one of the following: a reference sending moment of the first reference signal; and a time offset time offset; and
a first reference signal receiving submodule, configured to receive or measure, by the UE, the first reference signal at the sending moment of the first reference signal.

In an optional embodiment, the reference sending moment of the first reference signal is determined according to at least one of the following:
a moment at which the network side device sends the first indication information;
a moment at which the UE reports the assistance information; and
a candidate sending moment predefined by a protocol or preconfigured by the network side device.

In an optional embodiment, the time offset time offset is determined according to at least one of the following:
a processing time for processing the first indication information by the UE;
a processing time for processing, by the network side device, a HARQ-ACK sent by the UE;
a preparing time for the network side device to send the first reference signal;
a processing time for processing, by the network side device, the assistance information reported by the UE;
a first time, where the first time represents an additional processing time predefined by a protocol;
a second time, where the second time represents a time reserved for unified SSB sending;
indicated by the UE;
indicated by the network side device;
predefined by a protocol; and
preconfigured by the network side device.

In an optional embodiment, the determining module includes:
a first behavior execution submodule, configured to perform, by the UE, a first behavior according to the first information; where the first behavior includes at least one of the following:
receiving the first reference signal;
sending a first sending object, where the first sending object includes at least one of the following: a PUCCH, a PUSCH, a physical random access channel PRACH, and a sounding reference signal SRS; and
receiving a first receiving object, where the first receiving object includes at least one of the following: a physical downlink control channel PDCCH, a physical downlink shared channel PDSCH, a CSI-RS, a TRS, and a PTRS.

In an optional embodiment, the first information according to which the UE performs the first behavior includes at least a first condition and first target information; and the first behavior execution submodule includes at least one of the following:
a first target information determining unit, configured to preferentially receive, by the UE, the first reference signal according to the first target information; and
a first condition determining unit, configured to preferentially receive, by the UE, the first reference signal when the first condition is met, where the first condition includes at least one of the following:
   the UE has requested the first reference signal from the network side device;
   the first reference signal is sent by the network side device for the first time;
   a measurement result of a first object by the UE is less than a threshold;
   the UE is no longer synchronized;
   the UE is close to asynchronization;
   a sending period of the first reference signal is greater than or equal to a longest sending period or a longest sending interval of the first reference signal that is supported by the synchronization capability of the UE;
   a sending period of the first reference signal is greater than a period threshold;
   the first reference signal is not received within a first time window or a second time segment;
   the sending moment of the first reference signal at least partially overlaps with a sending moment of the first sending object;
   the sending moment of the first reference signal at least partially overlaps with a sending moment of the first receiving object;
   the first sending object or the first receiving object is control information;
   the first sending object or the first receiving object includes control information;
   a priority of an uplink UL is greater than or equal to a first threshold or less than or equal to a second threshold;
   a priority of a downlink DL is greater than or equal to a third threshold or less than or equal to a fourth threshold;
   the sending moment of the first reference signal at least partially overlaps a sending moment of the first sending object that meets a third condition; and
   the sending moment of the first reference signal at least partially overlaps with a sending moment of the first receiving object that meets the third condition; where
   the third condition includes at least one of the following:
      the first sending object or the first receiving object is located in a Scell;
      the first sending object or the first receiving object is located in a Pcell;
      the first sending object or the first receiving object is transmitted for the first time; and
      the first sending object or the first receiving object is retransmitted; and
      the first target information includes at least one of the following:
         whether a transmission resource of the first sending object or the first receiving object is dynamic grant DG;
         whether a transmission resource of the first sending object or the first receiving object is configuration grant CG;
         whether the first reference signal is triggered by the UE;
         a purpose for receiving the first reference signal;
         synchronization state information of the UE;
         measurement information of the UE;
         a sending mode of the first reference signal; and
         whether the first reference signal can be received within a first time segment.

In an optional embodiment, the first information according to which the UE performs the first behavior includes at least a second condition and second target information; and the first behavior execution submodule includes at least one of the following:
a second target information determining unit, configured to preferentially send, by the UE, a priority of the first sending object or preferentially receive the first receiving object according to the second target information; and
a second condition determining unit, configured to preferentially send, by the UE, the priority of the first sending object or preferentially receive the first receiving object when the second condition is satisfied, where the second condition includes at least one of the following:
   the UE has not requested the first reference signal from the network side device;
   the first reference signal is not sent by the network side device for the first time;
   a measurement result of a first object by the UE is greater than a threshold;
   the UE implements synchronization by using another cell;
   a synchronization state level of the UE is greater than a preset state level;
   a sending period of the first reference signal is less than a period threshold;
   the first reference signal can be received within a first time window or a second time segment;
   the sending moment of the first reference signal at least partially overlaps with a sending moment of the first sending object;
   the sending moment of the first reference signal at least partially overlaps with a sending moment of the first receiving object;
   the first sending object or the first receiving object is control information;
   the first sending object or the first receiving object includes control information;
   a priority of an uplink UL is less than or equal to a first threshold or greater than or equal to a second threshold;
   a priority of a downlink DL is less than or equal to a third threshold or greater than or equal to a fourth threshold;
   the sending moment of the first reference signal at least partially overlaps a sending moment of the first sending object that meets a fourth condition; and
   the sending moment of the first reference signal at least partially overlaps with a sending moment of the first receiving object that meets the fourth condition; where
   the fourth condition includes at least one of the following:
      the first sending object or the first receiving object is located in a Scell;
      the first sending object or the first receiving object is located in a Pcell;
      the first sending object or the first receiving object is transmitted for the first time; and
      the first sending object or the first receiving object is retransmitted; and
      the second target information includes at least one of the following:
         whether a transmission resource of the first sending object or the first receiving object is DG;
         whether a transmission resource of the first sending object or the first receiving object is CG;
         whether the first reference signal is triggered by the UE;
         whether the first reference signal can be received within a first time segment;
         a purpose for receiving the first reference signal;
         synchronization state information of the UE;
         measurement information of the UE; and
         a sending mode of the first reference signal.

In an optional embodiment, the assistance information includes at least one of the following:
a synchronization capability of the UE;
measurement information of the UE;
second indication information, where the second indication information is used to trigger the network side device to send the first reference signal;
synchronization state information of the UE;
QCL information;
a sending mode of the first reference signal expected by the UE;
decoding information of the UE; and
energy saving information of the UE.

In an optional embodiment, the synchronization capability of the UE includes at least one of the following:
a longest sending period or a longest sending interval of the first reference signal that is supported when a synchronization state is maintained;
a synchronization signal processing time; and
a synchronization signal type.

In an optional embodiment, the measurement information of the UE includes at least one of the following:
a measurement object; where the measurement object includes at least one of the following: a DMRS, a CSI-RS, an SSB, a TRS, and a PTRS; and
a measurement result; where the measurement result includes at least one of the following: RSRP, RSSI, RSRQ, and a SINR.

In an optional embodiment, the apparatus further includes at least one of the following:
a first assistance information reporting module, configured to send and report assistance information to the network side device when the measurement result of the measurement object is less than a threshold; and
a second assistance information reporting module, configured to send and report the assistance information to the network side device when the measurement result of the measurement object is not less than the threshold.

In an optional embodiment, the synchronization state information of the UE includes at least one of the following:
a sending period of the first reference signal expected by the UE;
a synchronization state;
a latest time for receiving the first reference signal expected by the UE; and
an offset value of a CP.

In an optional embodiment, the QCL information includes at least one of the following:
an SSB index index; and
RS info.

In an optional embodiment, the decoding information of the UE includes at least one of the following:
a decoding success rate;
a decoding failure rate;
an ACK rate;
a NACK rate;
a quantity of ACKs; and
a quantity of NACKs.

In an optional embodiment, the energy saving information of the UE includes at least one of the following:
an energy saving level;
a battery level or a remaining battery level; and
CDRX information.

In an optional embodiment, the sending mode of the first reference signal includes at least one of the following:
a first sending period of the first reference signal, where the first sending period is greater than 160 milliseconds;
at least two different sending periods of the first reference signal;
a quantity of sending periods of the first reference signal;
a sending manner of the first reference signal, where the sending manner is used to indicate a time domain interval or a quantity of transmissions in a slot used for sending the first reference signal;
sending mode information of the first reference signal, where the sending mode information is used for representing at least one of the following: a sending mode in which a time interval is gradually increased, and a sending mode in which a sending period is not changed; and
sending time information of the first reference signal, including at least one of the following: a sending time window, a sending duration, a sending resource starting location, and a sending resource ending location of the first reference signal.

The information transmission apparatus in embodiments of this application may be an electronic device, for example, an electronic device having an operating system, or a component in an electronic device, for example, an integrated circuit or a chip. The electronic device may be a terminal or other devices other than the terminal. For example, the terminal may include but is not limited to the types of terminals 11 listed above, and other devices may be servers, network attached storage (Network Attached Storage, NAS), or the like, which are not specifically limited in the embodiments of this application.

The information transmission apparatus provided in embodiments of this application can implement each process implemented in the method embodiment in FIG. 3 or FIG. 4, and achieves a same technical effect. To avoid repetition, details are not described herein again.

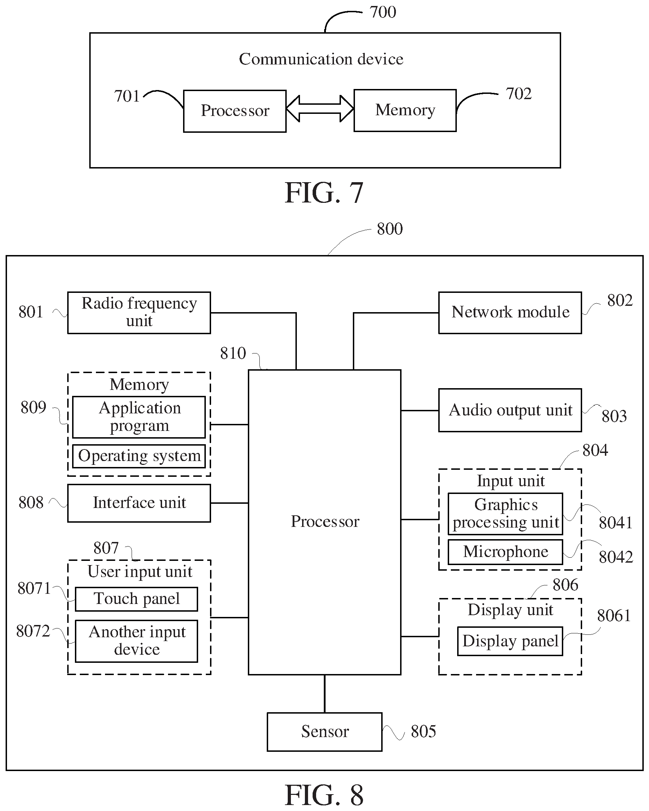

As shown in FIG. 7, an embodiment of this application further provides a communication device 700, including a processor 701 and a memory 702. The memory 702 stores a program and an instruction that can be run on the processor 701. For example, when the communication device 700 is a user device, and when the program or the instruction is executed by the processor 701, all steps of the information transmission method embodiment are implemented, and a same technical effect can be achieved. When the communication device 700 is a network side device, and when the program or the instruction is executed by the processor 701, all steps of the information transmission method embodiment are implemented, and a same technical effect can be achieved. Details are not described herein again to avoid repetition.

An embodiment of this application further provides user equipment, including a processor and a communications interface. The communications interface is coupled to the processor, and the processor is configured to run a program or an instruction, to implement the steps in the method embodiment in FIG. 4. The user equipment embodiment corresponds to the above terminal side method embodiment, and each implementation process and implementation mode of the above method embodiment are applicable to the embodiment of the user equipment, and can achieve a same technical effect. Specifically, FIG. 8 is a schematic diagram of a hardware structure of user equipment according to an embodiment of the present application.

The user equipment 800 includes, but is not limited to, at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the user equipment 800 may further include a power supply (such as a battery) for supplying power to the components. The power supply may be logically connected to the processor 810 by using a power management system, to implement functions such as charging, discharging, and power consumption management by using the power management system. A structure of the user equipment shown in FIG. 8 does not constitute limitations to the user equipment. The user equipment may include more or fewer components than those shown in the figure, some combined components, or different component arrangements, which are not described herein.

It should be understood that, in this embodiment of this application, the input unit 804 may include a graphics processing unit and a microphone 8042, and the graphics processing unit 8041 processes static pictures or video image data obtained by an image capturing device (such as a camera) in a video capturing mode or an image capturing mode. The display unit 806 may include a display panel 8061, and the display panel 8061 may be configured in a form of a liquid crystal display, an organic light-emitting diode or the like. The user input unit 807 includes at least one of a touch panel 8071 and another input device 8072. The touch panel 8071 is also called a touch screen. The touch panel 8071 may include two parts: a touch detection apparatus and a touch controller. The another input device 8072 may include, but is not limited to, a physical keyboard, function keys (for example, a volume control key and a switch key), a trackball, a mouse, and a joystick. Details are not described herein.

In the embodiments of this application, after receiving downlink data from the network side device, the radio frequency unit 801 can transmit the data to the processor 810 for processing. In addition, the radio frequency unit 801 can send uplink data to the network side device. Generally, the radio frequency unit 801 includes, but is not limited to, an antenna, an amplifier, a transceiver, a coupler, a low noise amplifier, a duplexer, and the like.

The memory 809 may be configured to store software programs or instructions and various pieces of data. The memory 809 may mainly include a first storage area storing a program or an instruction and a second storage area storing data, where the first storage area may store an operating system, an application program or an instruction required by at least one function (such as a sound playback function or an image display function) and the like. In addition, the memory 809 may include a volatile memory or a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 809 in the embodiments of the present application includes, but is not limited to, these and any other suitable types of memories.

The processor 810 may include one or more processing units. Optionally, the processor 810 may integrate an application processor and a modem processor, where the application processor mainly processes an operating system, a user interface, an application program, and the like, and the modem processor mainly processes wireless communication signals, such as a baseband processor. It may be understood that the modem processor may alternatively not be integrated into the processor 810.

It may be understood that, for implementation processes of various implementations mentioned in the embodiments, refer to related descriptions in method embodiments, and the same or corresponding technical effects are achieved. To avoid repetition, details are not described herein again.

An embodiment of the present application further provides a network side device. The network side device includes a processor and a communications interface. The communications interface is coupled to the processor. The processor is configured to run a program or an instruction, to implement steps in the information transmission method embodiment shown in FIG. 3 or FIG. 4. This embodiment of the network side device corresponds to the above method embodiment on the network side device, and each implementation process and implementation mode of the above method embodiment can be applied to this embodiment of the network side device, and can achieve a same technical effect.

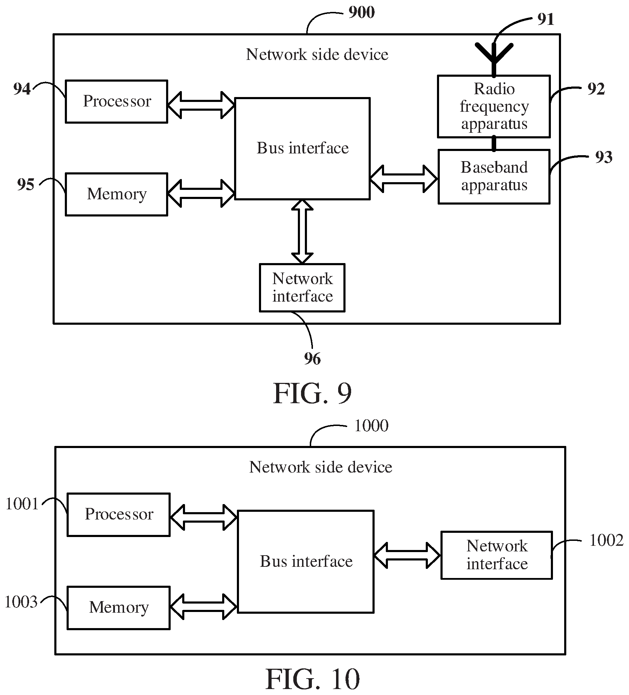

Specifically, An embodiment of the present application further provides a network side device. As shown in FIG. 9, the network side device 900 includes: an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91 and sends the received information to the baseband apparatus 93 for processing. in a downlink direction, the baseband apparatus 93 processes information to be sent, and sends the information to the radio frequency apparatus 92, and the radio frequency apparatus 92 processes the received information and then sends the information through the antenna 91.

The method performed by the network side device in the foregoing embodiment may be implemented in the baseband apparatus 93. The baseband apparatus 93 includes a baseband processor.

The baseband apparatus 93 may include, for example, at least one baseband board. A plurality of chips are arranged on the baseband board, as shown in FIG. 9. One of the chips is, for example, a baseband processor, and is connected to the memory 95 through a bus interface to call a program or an instruction in the memory 95 and perform the operations of the network device shown in the foregoing method embodiment.

The network side device may further include a network interface 96, and the interface is, for example, a common public radio interface (common public radio interface, CPRI).

In addition, the network side device 900 in this embodiment of this application further includes: a program or an instruction stored in the memory 95 and executable on the processor 94, and the processor 94 calls the program or the instruction in the memory 95 to perform the method executed by each module shown in FIG. 5, and can achieve a same technical effect. To avoid repetition, details are not described herein again.

Specifically, An embodiment of the present application further provides a network side device. As shown in FIG. 10, the network side device 1000 includes a processor 1001, a network interface 1002, and a memory 1003. The network interface 1002 is, for example, a common public radio interface (common public radio interface, CPRI).

Specifically, the network side device 1000 in this embodiment of this application further includes: a program or an instruction stored in the memory 1003 and executable on the processor 1001, and the processor 1001 calls the program or the instruction in the memory 1003 to perform the method executed by each module shown in FIG. 5, and can achieve a same technical effect. To avoid repetition, details are not described herein again.

An embodiment of this application further provides a readable storage medium, storing a program or an instruction, where when the program or the instruction is executed by a processor, the foregoing information transmission method embodiments or various processes of the foregoing information transmission method embodiments are implemented, and a same technical effect can be achieved. To avoid repetition, details are not described herein again.

The processor is the processor in the terminal or the processor in the network side device described in the foregoing embodiments. The readable storage medium includes a computer-readable storage medium, such as a computer read-only memory ROM, a random access memory RAM, a magnetic disk, an optical disc, or the like. In some examples, the readable storage medium may be a non-transitory readable storage medium.

An embodiment of the present application further provides a chip, the chip includes a processor and a communications interface, the communications interface is coupled to the processor, and the processor is configured to run a program or an instruction to implement each process of the embodiment of the foregoing information transmission method and a same technical effect can be achieved. To avoid repetition, details are not described herein again.

It should be understood that the chip mentioned in the embodiments of the present application may also be called a system-level chip, a system chip, a chip system, or a system-on-chip.

An embodiment of this application further provides a computer program/program product. The computer program/program product is stored in a storage medium. The computer program/program product is executed by at least one processor to implement each process of the foregoing information transmission method embodiments, and a same technical effect can be achieved. To avoid repetition, details are not described herein again.

An embodiment of this application further provides an information transmission system, including user equipment and a network side device. The user equipment may be configured to perform steps of the foregoing information transmission method. The network side device may be configured to perform steps of the foregoing information transmission method.

It should be noted that, in this specification, the terms "comprise", "include", and any other variants thereof are intended to cover non-exclusive inclusion, so that a process, a method, an article, or an apparatus that includes a series of elements not only includes these very elements, but also includes other elements not expressly listed, or also includes elements inherent to this process, method, article, or apparatus. An element preceded by a statement "includes a..." does not, without more constraints, preclude the presence of additional identical elements in the process, method, article, or apparatus that includes the element. In addition, it should be noted that a scope of the method and the apparatus in the implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

According to the foregoing descriptions of the implementations, a person skilled in the art may clearly understand that the methods in the embodiments may be implemented by using computer software products and a necessary universal hardware platform, or certainly may be implemented by using hardware. The computer software product is stored in a storage medium (such as a ROM, a RAM, a magnetic disk, or an optical disc), and includes several instructions for enabling user equipment or a network side device to perform the method described in the embodiments of this application.

The embodiments of this application are described above with reference to the accompanying drawings. However, this application is not limited to the specific implementations described above, and the specific implementations described above are only exemplary and not limitative. A person of ordinary skill in the art may make various variations under the teaching of this application without departing from the spirit of this application and the protection scope of the claims, and such variations shall all fall within the protection scope of this application.

## Claims

1. An information transmission method, comprising:
performing, by a network side device, at least one of the following:
sending a first reference signal in a first sending mode;
sending the first reference signal according to assistance information reported by user equipment UE; and
sending first indication information related to the first reference signal, wherein the first indication information comprises at least one of the following:
a sending indication of the first reference signal;
a sending pause indication of the first reference signal; and
the first sending mode.

2. The information transmission method according to claim 1, wherein the sending first indication information related to the first reference signal comprises:
sending, according to the assistance information reported by the UE, the first indication information related to the first reference signal.

3. The information transmission method according to claim 1, wherein the network side device sends the first reference signal or the first indication information according to at least one of the following granularities:
a serving cell;
a serving cell group;
a synchronization signal block SSB frequency channel number;
an SSB frequency channel number group;
a physical cell identifier PCI;
a PCI group;
a measurement object Measurement Object;
a measurement object group;
a beam; and
a beam group.

4. The information transmission method according to any one of claims 1 to 3, wherein the assistance information reported by the UE comprises at least one of the following:
a synchronization capability of the UE;
measurement information of the UE;
second indication information, wherein the second indication information is used to trigger the network side device to send the first reference signal;
synchronization state information of the UE;
QCL information;
a sending mode of the first reference signal expected by the UE;
decoding information of the UE; and
energy saving information of the UE.

5. The information transmission method according to claim 4, wherein the synchronization capability of the UE comprises at least one of the following:
a longest sending period or a longest sending interval of the first reference signal that is supported when a synchronization state is maintained;
a synchronization signal processing time; and
a synchronization signal type.

6. The information transmission method according to claim 4, wherein the synchronization state information of the UE comprises at least one of the following:
a sending period of the first reference signal expected by the UE;
a quantity of transmissions or a quantity of repetitions of the first reference signal expected by the UE;
a synchronization state;
a latest time for receiving the first reference signal expected by the UE; and
an offset value of a cyclic prefix CP.

7. The information transmission method according to claim 1 or 4, wherein the first sending mode comprises at least one of the following:
a first sending period of the first reference signal, wherein the first sending period is greater than 160 milliseconds;
at least two different sending periods of the first reference signal;
a quantity of sending periods of the first reference signal;
a sending manner of the first reference signal, wherein the sending manner is used to indicate a time domain interval or a quantity of transmissions in a slot used for sending the first reference signal;
sending mode information of the first reference signal, wherein the sending mode information is used for representing at least one of the following: a sending mode in which a time interval is gradually increased, and a sending mode in which a sending period is not changed; and
sending time information of the first reference signal, comprising at least one of the following: a sending time window, a sending duration, a sending resource starting location, and a sending resource ending location of the first reference signal.

8. The information transmission method according to claim 1, wherein the network side device sends the first reference signal or a sending indication of the first reference signal when at least one of the following conditions is met:
measurement results corresponding to measurement objects reported by all or at least some UEs reporting the assistance information are less than a threshold;
the UE requests the network side device to send the first reference signal or change a sending period of the first reference signal;
UEs whose quantity is greater than N or whose ratio is greater than Q request the network side device to send the first reference signal or change a sending period of the first reference signal, wherein N is greater than 0, and Q is greater than 0 and less than 1; and
downlink data arrives at the UE that requests the network side device to send the first reference signal.

9. The information transmission method according to claim 1, wherein the network side device pauses sending of the first reference signal or sends a sending pause indication of the first reference signal when at least one of the following conditions is met:
the UE reporting the assistance information instructs to stop receiving the first reference signal;
the UE reporting the assistance information indicates CDRX information or state switch information;
measurement results corresponding to measurement objects reported by all or at least some UEs reporting the assistance information are greater than a threshold;
all or at least some UEs reporting the assistance information indicate that the first reference signal is no longer needed;
all or at least some UEs reporting the assistance information indicate that another cell may be used for synchronization;
the network side device no longer receives the assistance information reported by the UE;
a sending time window of the first reference signal ends;
a sending resource ending location of the first reference signal is reached; and
sending is performed for T times according to a maximum sending period, wherein T is greater than 0.

10. The information transmission method according to claim 1, wherein the assistance information reported by the UE is transmitted by using at least one of the following:
a physical uplink control channel PUCCH;
a physical uplink shared channel PUSCH; and
a wakeup signal WUS.

11. The information transmission method according to claim 10, wherein a priority of the assistance information reported by the UE meets at least one of the following:
a priority of the assistance information transmitted through the PUCCH is a target priority;
a priority of the assistance information transmitted through the PUSCH is determined according to a priority of the PUSCH; and
a priority of the assistance information reported by the UE is determined according to information carried in the assistance information reported by the UE.

12. The information transmission method according to claim 1, wherein the sending a first reference signal according to assistance information reported by user equipment UE comprises at least one of the following:
sending, by the network side device during sending of the first reference signal according to a first sending period, the first reference signal according to the assistance information reported by the UE;
sending, by the network side device, the first reference signal according to a second sending period, pausing sending of the first reference signal after the signal is sent for a first quantity of times, and continuing to send the first reference signal after a first time or according to the assistance information reported by the UE;
gradually prolonging, by the network side device, a sending period of the first reference signal until a length of the sending period reaches a period threshold, pausing, by the network side device, sending of the first reference signal, and continuing to send the first reference signal after a specific time or according to the assistance information reported by the UE; and
gradually prolonging, by the network side device, the sending period of the first reference signal until the length of the sending period reaches the period threshold, keeping sending the first reference signal according to a maximum sending period, until the sending period of the first reference signal is changed according to the assistance information reported by the UE or the first indication information of the network side device, and continuing to send the first reference signal according to a new period.

13. The information transmission method according to claim 1, wherein a sending moment at which the network side device sends the first reference signal is determined according to at least one of the following:
a reference sending moment of the first reference signal; and
a time offset.

14. The information transmission method according to claim 13, wherein the reference sending moment of the first reference signal is determined according to at least one of the following:
a moment at which the network side device sends the first indication information;
a moment at which the UE reports the assistance information; and
a candidate sending moment predefined by a protocol or preconfigured by the network side device.

15. The information transmission method according to claim 13, wherein the time offset time offset is determined according to at least one of the following:
a processing time for processing the first indication information by the UE;
a processing time for processing, by the network side device, a HARQ-ACK sent by the UE;
a preparing time for the network side device to send the first reference signal;
a processing time for processing, by the network side device, the assistance information reported by the UE;
a first time, wherein the first time represents an additional processing time predefined by a protocol;
a second time, wherein the second time represents a time reserved for unified SSB sending;
indicated by the UE;
indicated by the network side device;
predefined by a protocol; and
preconfigured by the network side device.

16. An information transmission method, comprising:
performing, by user equipment UE, at least one of the following:
reporting assistance information to a network side device, wherein the assistance information is used to trigger the network side device to send a first reference signal;
determining, according to first information, whether to receive the first reference signal sent by the network side device; and
after receiving first indication information that is related to the first reference signal and that is sent by the network side device, receiving the first reference signal sent by the network side device, wherein the first indication information comprises at least one of the following:
a sending indication of the first reference signal;
a sending pause indication of the first reference signal; and
a sending mode of the first reference signal.

17. The information transmission method according to claim 16, wherein the receiving, by the UE, the first reference signal sent by the network side device comprises:
determining, by the UE, a sending moment of the first reference signal according to at least one of the following: a reference sending moment of the first reference signal; and a time offset; and
receiving or measuring, by the UE, the first reference signal at the sending moment of the first reference signal.

18. The information transmission method according to claim 17, wherein the reference sending moment of the first reference signal is determined according to at least one of the following:
a moment at which the network side device sends the first indication information;
a moment at which the UE reports the assistance information; and
a candidate sending moment predefined by a protocol or preconfigured by the network side device.

19. The information transmission method according to claim 17, wherein the time offset time offset is determined according to at least one of the following:
a processing time for processing the first indication information by the UE;
a processing time for processing, by the network side device, a HARQ-ACK sent by the UE;
a preparing time for the network side device to send the first reference signal;
a processing time for processing, by the network side device, the assistance information reported by the UE;
a first time, wherein the first time represents an additional processing time predefined by a protocol;
a second time, wherein the second time represents a time reserved for unified SSB sending;
indicated by the UE;
indicated by the network side device;
predefined by a protocol; and
preconfigured by the network side device.

20. The information transmission method according to claim 16, wherein the determining, by the UE according to first information, whether to receive the first reference signal sent by the network side device comprises:
performing, by the UE, a first behavior according to the first information; wherein the first behavior comprises at least one of the following:
receiving the first reference signal;
sending a first sending object, wherein the first sending object comprises at least one of the following: a PUCCH, a PUSCH, a physical random access channel PRACH, and a sounding reference signal SRS; and
receiving a first receiving object, wherein the first receiving object comprises at least one of the following: a physical downlink control channel PDCCH, a physical downlink shared channel PDSCH, a CSI-RS, a TRS, and a PTRS.

21. The information transmission method according to claim 20, wherein the first information according to which the UE performs the first behavior comprises at least a first condition and first target information; and the performing, by the UE, a first behavior according to the first information comprises at least one of the following:
preferentially receiving, by the UE, the first reference signal according to the first target information; and
preferentially receiving, by the UE, the first reference signal when the first condition is met, wherein the first condition comprises at least one of the following:
the UE has requested the first reference signal from the network side device;
the first reference signal is sent by the network side device for the first time;
a measurement result of a first object by the UE is less than a threshold;
the UE is no longer synchronized;
the UE is close to asynchronization;
a sending period of the first reference signal is greater than or equal to a longest sending period or a longest sending interval of the first reference signal that is supported by the synchronization capability of the UE;
a sending period of the first reference signal is greater than a period threshold;
the first reference signal is not received within a first time window or a second time segment;
the sending moment of the first reference signal at least partially overlaps with a sending moment of the first sending object;
the sending moment of the first reference signal at least partially overlaps with a sending moment of the first receiving object;
the first sending object or the first receiving object is control information;
the first sending object or the first receiving object comprises control information;
a priority of an uplink UL is greater than or equal to a first threshold or less than or equal to a second threshold;
a priority of a downlink DL is greater than or equal to a third threshold or less than or equal to a fourth threshold;
the sending moment of the first reference signal at least partially overlaps a sending moment of the first sending object that meets a third condition; and
the sending moment of the first reference signal at least partially overlaps with a sending moment of the first receiving object that meets the third condition; wherein
the third condition comprises at least one of the following:
the first sending object or the first receiving object is located in a Scell;
the first sending object or the first receiving object is located in a Pcell;
the first sending object or the first receiving object is transmitted for the first time; and
the first sending object or the first receiving object is retransmitted; and
the first target information comprises at least one of the following:
whether a transmission resource of the first sending object or the first receiving object is dynamic grant DG;
whether a transmission resource of the first sending object or the first receiving object is configuration grant CG;
whether the first reference signal is triggered by the UE;
a purpose for receiving the first reference signal;
synchronization state information of the UE;
measurement information of the UE;
a sending mode of the first reference signal; and
whether the first reference signal can be received within a first time segment.

22. The information transmission method according to claim 20, wherein the first information according to which the UE performs the first behavior comprises at least a second condition and second target information; and the performing, by the UE, a first behavior according to the first information comprises at least one of the following:
preferentially sending, by the UE, a priority of the first sending object or preferentially receiving the first receiving object according to the second target information; and
preferentially sending, by the UE, the priority of the first sending object or preferentially receiving the first receiving object when the second condition is satisfied, wherein the second condition comprises at least one of the following:
the UE has not requested the first reference signal from the network side device;
the first reference signal is not sent by the network side device for the first time;
a measurement result of a first object by the UE is greater than a threshold;
the UE implements synchronization by using another cell;
a synchronization state level of the UE is greater than a preset state level;
a sending period of the first reference signal is less than a period threshold;
the first reference signal can be received within a first time window or a second time segment;
the sending moment of the first reference signal at least partially overlaps with a sending moment of the first sending object;
the sending moment of the first reference signal at least partially overlaps with a sending moment of the first receiving object;
the first sending object or the first receiving object is control information;
the first sending object or the first receiving object comprises control information;
a priority of an uplink UL is less than or equal to a first threshold or greater than or equal to a second threshold;
a priority of a downlink DL is less than or equal to a third threshold or greater than or equal to a fourth threshold;
the sending moment of the first reference signal at least partially overlaps a sending moment of the first sending object that meets a fourth condition; and
the sending moment of the first reference signal at least partially overlaps with a sending moment of the first receiving object that meets the fourth condition; wherein
the fourth condition comprises at least one of the following:
the first sending object or the first receiving object is located in a Scell;
the first sending object or the first receiving object is located in a Pcell;
the first sending object or the first receiving object is transmitted for the first time; and
the first sending object or the first receiving object is retransmitted; and
the second target information comprises at least one of the following:
whether a transmission resource of the first sending object or the first receiving object is DG;
whether a transmission resource of the first sending object or the first receiving object is CG;
whether the first reference signal is triggered by the UE;
whether the first reference signal can be received within a first time segment;
a purpose for receiving the first reference signal;
synchronization state information of the UE;
measurement information of the UE; and
a sending mode of the first reference signal.

23. The information transmission method according to claim 16, wherein the assistance information comprises at least one of the following:
a synchronization capability of the UE;
measurement information of the UE;
second indication information, wherein the second indication information is used to trigger the network side device to send the first reference signal;
synchronization state information of the UE;
QCL information;
a sending mode of the first reference signal expected by the UE;
decoding information of the UE; and
energy saving information of the UE.

24. The information transmission method according to claim 23, wherein the synchronization capability of the UE comprises at least one of the following:
a longest sending period or a longest sending interval of the first reference signal that is supported when a synchronization state is maintained;
a synchronization signal processing time; and
a synchronization signal type.

25. The information transmission method according to claim 16, further comprising at least one of the following:
sending and reporting assistance information to the network side device when a measurement result of a measurement object is less than a threshold; and
sending and reporting the assistance information to the network side device when the measurement result of the measurement object is not less than the threshold.

26. The information transmission method according to claim 23, wherein the synchronization state information of the UE comprises at least one of the following:
a sending period of the first reference signal expected by the UE;
a synchronization state;
a latest time for receiving the first reference signal expected by the UE; and
an offset value of a CP.

27. The information transmission method according to claim 16, wherein the sending mode of the first reference signal comprises at least one of the following:
a first sending period of the first reference signal, wherein the first sending period is greater than 160 milliseconds;
at least two different sending periods of the first reference signal;
a quantity of sending periods of the first reference signal;
a sending manner of the first reference signal, wherein the sending manner is used to indicate a time domain interval or a quantity of transmissions in a slot used for sending the first reference signal;
sending mode information of the first reference signal, wherein the sending mode information is used for representing at least one of the following: a sending mode in which a time interval is gradually increased, and a sending mode in which a sending period is not changed; and
sending time information of the first reference signal, comprising at least one of the following: a sending time window, a sending duration, a sending resource starting location, and a sending resource ending location of the first reference signal.

28. An information transmission apparatus, applied to a network side device and comprising:
a first sending module, configured to send a first reference signal in a first sending mode;
a second sending module, configured to send the first reference signal according to assistance information reported by user equipment UE; and
a third sending module, configured to send first indication information related to the first reference signal, wherein the first indication information comprises at least one of the following:
a sending indication of the first reference signal;
a sending pause indication of the first reference signal; and
the first sending mode.

29. The information transmission apparatus according to claim 28, wherein the third sending module comprises:
a first indication information sending submodule, configured to send, according to the assistance information reported by the UE, the first indication information related to the first reference signal.

30. The information transmission apparatus according to claim 28, wherein the first sending mode comprises at least one of the following:
a first sending period of the first reference signal, wherein the first sending period is greater than 160 milliseconds;
at least two different sending periods of the first reference signal;
a quantity of sending periods of the first reference signal;
a sending manner of the first reference signal, wherein the sending manner is used to indicate a time domain interval or a quantity of transmissions in a slot used for sending the first reference signal;
sending mode information of the first reference signal, wherein the sending mode information is used for representing at least one of the following: a sending mode in which a time interval is gradually increased, and a sending mode in which a sending period is not changed; and
sending time information of the first reference signal, comprising at least one of the following: a sending time window, a sending duration, a sending resource starting location, and a sending resource ending location of the first reference signal.

31. The information transmission apparatus according to claim 28, wherein the network side device sends the first reference signal or a sending indication of the first reference signal when at least one of the following conditions is met:
measurement results corresponding to measurement objects reported by all or at least some UEs reporting the assistance information are less than a threshold;
the UE requests the network side device to send the first reference signal or change a sending period of the first reference signal;
UEs whose quantity is greater than N or whose ratio is greater than Q request the network side device to send the first reference signal or change a sending period of the first reference signal, wherein N is greater than 0, and Q is greater than 0 and less than 1; and
downlink data arrives at the UE that requests the network side device to send the first reference signal.

32. The information transmission apparatus according to claim 28, wherein the network side device pauses sending of the first reference signal or sends a sending pause indication of the first reference signal when at least one of the following conditions is met:
the UE reporting the assistance information instructs to stop receiving the first reference signal;
the UE reporting the assistance information indicates CDRX information or state switch information;
measurement results corresponding to measurement objects reported by all or at least some UEs reporting the assistance information are greater than a threshold;
all or at least some UEs reporting the assistance information indicate that the first reference signal is no longer needed;
all or at least some UEs reporting the assistance information indicate that another cell may be used for synchronization;
the network side device no longer receives the assistance information reported by the UE;
a sending time window of the first reference signal ends;
a sending resource ending location of the first reference signal is reached; and
sending is performed for T times according to a maximum sending period, wherein T is greater than 0.

33. The information transmission apparatus according to claim 28, wherein the second sending module comprises at least one of the following:
a first sending submodule, configured to send, by the network side device during sending of the first reference signal according to a first sending period, the first reference signal according to the assistance information reported by the UE;
a second sending submodule, configured to send, by the network side device, the first reference signal according to a second sending period, pause sending of the first reference signal after the signal is sent for a first quantity of times, and continue to send the first reference signal after a first time or according to the assistance information reported by the UE;
a third sending submodule, configured to gradually prolong, by the network side device, a sending period of the first reference signal until a length of the sending period reaches a period threshold, pause, by the network side device, sending of the first reference signal, and continue to send the first reference signal after a specific time or according to the assistance information reported by the UE; and
a fourth sending submodule, configured to gradually prolong, by the network side device, the sending period of the first reference signal until the length of the sending period reaches the period threshold, keep sending the first reference signal according to a maximum sending period, until the sending period of the first reference signal is changed according to the assistance information reported by the UE or the first indication information of the network side device, and continue to send the first reference signal according to a new period.

34. An information transmission apparatus, applied to user equipment UE and comprising:
a first reporting module, configured to report assistance information to a network side device, wherein the assistance information is used to trigger the network side device to send a first reference signal;
a determining module, configured to determine, according to first information, whether to receive the first reference signal sent by the network side device; and
a first receiving module, configured to: after receiving first indication information that is related to the first reference signal and that is sent by the network side device, receive the first reference signal sent by the network side device, wherein the first indication information comprises at least one of the following:
a sending indication of the first reference signal;
a sending pause indication of the first reference signal; and
a sending mode of the first reference signal.

35. The information transmission apparatus according to claim 34, wherein the first receiving module comprises:
a sending moment determining submodule, configured to determine, by the UE, a sending moment of the first reference signal according to at least one of the following: a reference sending moment of the first reference signal; and a time offset time offset; and
a first reference signal receiving submodule, configured to receive or measure, by the UE, the first reference signal at the sending moment of the first reference signal.

36. The information transmission apparatus according to claim 34, wherein the determining module comprises:
a first behavior execution submodule, configured to perform, by the UE, a first behavior according to the first information; wherein the first behavior comprises at least one of the following:
receiving the first reference signal;
sending a first sending object, wherein the first sending object comprises at least one of the following: a PUCCH, a PUSCH, a physical random access channel PRACH, and a sounding reference signal SRS; and
receiving a first receiving object, wherein the first receiving object comprises at least one of the following: a physical downlink control channel PDCCH, a physical downlink shared channel PDSCH, a CSI-RS, a TRS, and a PTRS.

37. The information transmission apparatus according to claim 36, wherein the first information according to which the UE performs the first behavior comprises at least a first condition and first target information; and the first behavior execution submodule comprises at least one of the following:
a first target information determining unit, configured to preferentially receive, by the UE, the first reference signal according to the first target information; and
a first condition determining unit, configured to preferentially receive, by the UE, the first reference signal when the first condition is met, wherein the first condition comprises at least one of the following:
the UE has requested the first reference signal from the network side device;
the first reference signal is sent by the network side device for the first time;
a measurement result of a first object by the UE is less than a threshold;
the UE is no longer synchronized;
the UE is close to asynchronization;
a sending period of the first reference signal is greater than or equal to a longest sending period or a longest sending interval of the first reference signal that is supported by the synchronization capability of the UE;
a sending period of the first reference signal is greater than a period threshold;
the first reference signal is not received within a first time window or a second time segment;
the sending moment of the first reference signal at least partially overlaps with a sending moment of the first sending object;
the sending moment of the first reference signal at least partially overlaps with a sending moment of the first receiving object;
the first sending object or the first receiving object is control information;
the first sending object or the first receiving object comprises control information;
a priority of an uplink UL is greater than or equal to a first threshold or less than or equal to a second threshold;
a priority of a downlink DL is greater than or equal to a third threshold or less than or equal to a fourth threshold;
the sending moment of the first reference signal at least partially overlaps a sending moment of the first sending object that meets a third condition; and
the sending moment of the first reference signal at least partially overlaps with a sending moment of the first receiving object that meets the third condition; wherein
the third condition comprises at least one of the following:
the first sending object or the first receiving object is located in a Scell;
the first sending object or the first receiving object is located in a Pcell;
the first sending object or the first receiving object is transmitted for the first time; and
the first sending object or the first receiving object is retransmitted; and
the first target information comprises at least one of the following:
whether a transmission resource of the first sending object or the first receiving object is dynamic grant DG;
whether a transmission resource of the first sending object or the first receiving object is configuration grant CG;
whether the first reference signal is triggered by the UE;
a purpose for receiving the first reference signal;
synchronization state information of the UE;
measurement information of the UE;
a sending mode of the first reference signal; and
whether the first reference signal can be received within a first time segment.

38. The information transmission apparatus according to claim 36, wherein the first information according to which the UE performs the first behavior comprises at least a second condition and second target information; and the first behavior execution submodule comprises at least one of the following:
a second target information determining unit, configured to preferentially send, by the UE, a priority of the first sending object or preferentially receive the first receiving object according to the second target information; and
a second condition determining unit, configured to preferentially send, by the UE, the priority of the first sending object or preferentially receive the first receiving object when the second condition is satisfied, wherein the second condition comprises at least one of the following:
the UE has not requested the first reference signal from the network side device;
the first reference signal is not sent by the network side device for the first time;
a measurement result of a first object by the UE is greater than a threshold;
the UE implements synchronization by using another cell;
a synchronization state level of the UE is greater than a preset state level;
a sending period of the first reference signal is less than a period threshold;
the first reference signal can be received within a first time window or a second time segment;
the sending moment of the first reference signal at least partially overlaps with a sending moment of the first sending object;
the sending moment of the first reference signal at least partially overlaps with a sending moment of the first receiving object;
the first sending object or the first receiving object is control information;
the first sending object or the first receiving object comprises control information;
a priority of an uplink UL is less than or equal to a first threshold or greater than or equal to a second threshold;
a priority of a downlink DL is less than or equal to a third threshold or greater than or equal to a fourth threshold;
the sending moment of the first reference signal at least partially overlaps a sending moment of the first sending object that meets a fourth condition; and
the sending moment of the first reference signal at least partially overlaps with a sending moment of the first receiving object that meets the fourth condition; wherein
the fourth condition comprises at least one of the following:
the first sending object or the first receiving object is located in a Scell;
the first sending object or the first receiving object is located in a Pcell;
the first sending object or the first receiving object is transmitted for the first time; and
the first sending object or the first receiving object is retransmitted; and
the second target information comprises at least one of the following:
whether a transmission resource of the first sending object or the first receiving object is DG;
whether a transmission resource of the first sending object or the first receiving object is CG;
whether the first reference signal is triggered by the UE;
whether the first reference signal can be received within a first time segment;
a purpose for receiving the first reference signal;
synchronization state information of the UE;
measurement information of the UE; and
a sending mode of the first reference signal.

39. The information transmission apparatus according to claim 34, further comprising at least one of the following:
a first assistance information reporting module, configured to send and report assistance information to the network side device when the measurement result of the measurement object is less than a threshold; and
a second assistance information reporting module, configured to send and report the assistance information to the network side device when the measurement result of the measurement object is not less than the threshold.

40. A network side device, comprising a processor and a memory, wherein the memory stores a program or an instruction that can be run on the processor, and when the program or the instruction is executed by the processor, steps of the information transmission method according to any one of claims 1 to 15 are implemented.

41. User equipment, comprising a processor and a memory, wherein the memory stores a program or an instruction that can be run on the processor, and when the program or the instruction is executed by the processor, the steps of the information transmission method according to any one of claims 16 to 27 are implemented.

42. A readable storage medium, wherein the readable storage medium stores a program or an instruction, and when the program or the instruction is executed by a processor, the steps of the information transmission method according to any one of claims 1 to 15 are implemented, or the steps of the information transmission method according to any one of claims 16 to 27 are implemented.
